(19) Europäisches Patentamt

European Patent Office

Office européen des brevets

(11) **EP 1 142 077 B1**

(12) **FASCICULE DE BREVET EUROPEEN**

(45) Date de publication et mention
de la délivrance du brevet:
**19.05.2004 Bulletin 2004/21**

(51) Int Cl.7: **H02H 7/085**, E05F 15/00,
G01L 1/24

(21) Numéro de dépôt: **99964578.1**

(22) Date de dépôt: **15.12.1999**

(86) Numéro de dépôt international:
**PCT/EP1999/009965**

(87) Numéro de publication internationale:
**WO 2000/036725 (22.06.2000 Gazette 2000/25)**

(54) **DISPOSITIF DE SECURITE ASSOCIE A UN PANNEAU COULISSANT ENTRAINE PAR UN MOTEUR ELECTRIQUE ET PROCEDE DE MISE EN OEUVRE D'UN TEL DISPOSITIF**

**SCHUTZVORRICHTUNG FÜR EIN VON EINEM ELEKTROMOTOR ANGETRIEBENEN SCHIEBEFENSTER UND INSTALLATIONSVERFAHREN EINER SOLCHEN VORRICHTUNG**

**SAFETY DEVICE ASSOCIATED WITH A SLIDING PANEL POWERED BY AN ELECTRIC MOTOR AND METHOD USING SAME**

(84) Etats contractants désignés:
**DE ES FR GB IT**

(30) Priorité: **15.12.1998 EP 98123825**

(43) Date de publication de la demande:
**10.10.2001 Bulletin 2001/41**

(73) Titulaire: **Talltec Technologies Holdings S.A.
2012 Luxembourg (LU)**

(72) Inventeurs:
• **BOUAMRA, Mohamed
F-64500 Saint Jean de Luz (FR)**
• **ZALDUA, Jesus
E-20280 Hondarribia - Gipuzkoa (ES)**
• **VICANDI, Javier
E-20800 Zarautz - Gipuzkoa (ES)**

• **IRIONDO, Jesus
E-20800 Zarautz - Gipuzkoa (ES)**

(74) Mandataire: **Ravenel, Thierry Gérard Louis et al
I C B,
Ingénieurs Conseils en Brevets SA,
7, rue des Sors
2074 Marin (CH)**

(56) Documents cités:
**EP-A- 0 345 914        EP-A- 0 419 267
DE-A- 3 809 957        DE-A- 3 911 493
DE-A- 4 030 607        DE-A- 4 330 904
DE-A- 4 331 781        DE-A- 4 416 803
DE-A- 4 423 104        DE-A- 19 623 420
DE-A- 19 724 952       GB-A- 2 125 572
US-A- 5 051 672        US-A- 5 404 673
US-A- 5 410 226        US-A- 5 428 923
US-A- 5 774 046**

**Description**

La présente invention concerne un procédé de commande dit séquentiel d'un panneau mobile entraîné à coulissement par un moteur électrique, procédé dans lequel on exploite de manière séquentielle le signal provenant d'un capteur de pression à fibre optique pour arrêter et inverser le sens de marche du moteur d'entraînement en cas de variation dudit signal, et la mesure fréquentielle des impulsions provoquées par un.dispositif d'encodage pour effectuer une prédétection d'obstacle et pour déterminer les positions de fin de course du panneau mobile.

En particulier, dans un mode de mise en oeuvre du procédé selon l'invention, il est prévu d'avoir recours à un dispositif de sécurité pour un tel panneau mobile comprenant des moyens de détection de la présence d'un corps étranger freinant le mouvement dudit panneau mobile et s'opposant à sa fermeture complète.

Dans un mode complémentaire de mise en oeuvre du procédé selon l'invention, il est prévu d'utiliser un capteur d'effort à fibre optique.

L'invention a enfin pour but de procurer un procédé du genre susdécrit dans lequel on calibre les moyens de détection directe et indirecte susmentionnés pour permettre d'accroître-la fiabilité du fonctionnement de ce capteur.

De plus en plus de véhicules automobiles sont équipés de lève-vitres électriques, c'est-à-dire de systèmes dans lesquels les vitres sont entraînées à coulissement dans le sens de l'ouverture ou dans le sens de la fermeture par un moteur électrique dont le fonctionnement est commandé par le conducteur du véhicule au moyen d'un interrupteur manuel. De tels systèmes ont permis de réaliser des progrès sensibles en matière de sécurité automobile, dans la mesure où le conducteur peut facilement ouvrir ou fermer les vitres tout en restant attentif aux conditions de circulation et à la conduite de son véhicule. Ces systèmes présentent toutefois d'importants problèmes de fiabilité qui sont souvent liés à l'apparition de pics de courant lors d'un arrêt trop brutal du moteur d'entraînement de la vitre. On sait, en effet, que tout obstacle à l'avancement de la vitre produit, au niveau du moteur, des pics de courant qui sont généralement néfastes, surtout pour certains composants tels que les relais de commande ou les transistors de commutation. De tels pics peuvent apparaître, par exemple lorsque l'automobiliste continue d'actionner l'interrupteur qui commande le fonctionnement du moteur d'entraînement alors que la vitre est déjà arrivée dans sa position de fermeture dans laquelle elle est appliquée contre le cadre de la porte. Des pics de courant peuvent aussi apparaître lorsqu'un corps étranger, par exemple un bras, est en appui sur le rebord de la vitre et s'oppose à la remontée de celle-ci.

Pour remédier aux difficultés susmentionnées, une solution connue consiste à mesurer le niveau maximum du courant d'alimentation fourni au moteur d'entraînement, et à bloquer ce courant au-dessus d'un seuil prédéterminé. Cette mesure est généralement effectuée aux bornes d'un transistor de commutation dont la résistance varie d'un composant à l'autre et reste dépendante de la température. D'autres méthodes utilisent des résistances de précision (mesure de courants) ou des sondes à effet Hall (mesure de champs magnétiques), mais le prix de revient de tels composants est élevé.

Une autre méthode de commande, moins coûteuse et plus efficace, consiste à détecter les impulsions provoquées par la commutation des balais du moteur d'entraînement. Ces impulsions se superposent au courant continu de consommation du moteur, et leur fréquence est proportionnelle à la vitesse du rotor. Une telle technique est décrite dans le brevet américain No 4,870,333 au nom de la société Sidosha Denki Kogyo qui propose un procédé de commande d'un lève-vitres électrique pour véhicule automobile dans lequel le nombre des impulsions générées par le fonctionnement du moteur électrique entraînant la vitre est enregistré dans un compteur. Lorsque le nombre d'impulsions enregistré dans le compteur atteint une valeur maximum prédéterminée, le dispositif de commande qui exploite le système conclut que la vitre est arrivée en position de pleine ouverture et provoque l'arrêt du moteur d'entraînement. Inversement, lorsque la vitre remonte, le nombre d'impulsions enregistré dans le compteur est diminué d'une unité pour chaque tour du moteur d'entraînement. Lorsque ce nombre devient égal à zéro, le système conclut que la vitre est arrivée dans sa position de fermeture dans laquelle elle est appliquée contre le cadre de la porte, et arrête à nouveau le moteur d'entraînement.

Le système ci-dessus a pour principal inconvénient que la vitesse d'ascension de la vitre n'est pas constante et dépend de nombreux paramètres tels que le couple d'entraînement du moteur, les frottements entre la vitre et le cadre de la porte, la vitesse et la trajectoire du véhicule etc. La position de la vitre ne peut, par conséquent, être calculée avec une précision suffisante pour pouvoir déterminer de manière exacte le moment où la fenêtre est complètement fermée. Avec une telle méthode, on peut tout au plus déterminer une zone de fin de course dans laquelle on sait que la vitre est au voisinage du cadre de la porte. Le moteur d'entraînement peut, par conséquent, être arrêté sur ordre du dispositif de commande avant que la fenêtre ne soit complètement fermée. Inversement, le moteur peut continuer à être alimenté en courant alors que la fenêtre est déjà complètement fermée, ce qui produit des pics de courant néfastes pour le moteur et l'électronique de commande. D'autre part, rien dans le brevet Sidosha n'est prévu pour détecter avant pincement une surcharge qui ferait obstacle à l'avancement de la vitre. Enfin, rien n'est prévu pour détecter la présence d'un corps étranger tel qu'une main d'enfant dont l'épaisseur est égale ou inférieure à la hauteur de la zone de fin de course. Or, lors de la fermeture automatique de panneaux mobiles tels que, notamment une vitre d'un véhicule automobile, on doit chercher à garantir la sécurité en évitant le coincement d'un corps étranger tel que, par exemple, un bras ou une main, entre ladite vitre et le cadre de la porte contre lequel celle-ci doit être appliquée. A cet effet, en cas de coincement, un dispositif de sécurité arrête l'entraînement ou inverse le sens du mouvement de la glace. Parmi les dispositifs de sécurité connus, une solution consiste à incorporer un guide d'ondes électromagnétiques, par exemple une fibre optique, à l'intérieur du joint d'étanchéité dans lequel est guidé la vitre. Un émetteur, par exemple une diode laser, injecte un signal lumineux à une extrémité de la fibre. Ce signal se propage jusqu'à un récepteur, par exemple une photodiode, placée à l'autre extrémité de la fibre. En cas d'incident, le corps étranger est entraîné par la glace remontant vers le joint d'étanchéité et exerce une pression sur la fibre optique. Sous l'effet de la pression, la fibre optique se déforme, ce qui entraîne une modification locale de son rayon de courbure. Cette modification du rayon de courbure de la fibre provoque des pertes importantes, et par suite une baisse de l'amplitude du signal optique capté par le récepteur. Il en résulte une baisse de l'amplitude du signal électrique émis par le récepteur vers un circuit de commande qui, en réponse à cette baisse, élabore un signal d'arrêt ou d'inversion du sens de marche du moteur entraînant la glace.

On connaît par le brevet allemand DE 44 16 803 un dispositif de sécurité associé à la vitre coulissante d'une porte de véhicule automobile. Ce dispositif comprend un aimant disposé sur l'arbre du moteur électrique d'entraînement de la vitre auquel est associé un capteur à effet Hall. En fonction des signaux émis par le capteur à effet Hall, un microprocesseur peut déterminer que la vitre est arrivée dans sa position de fermeture complète. Le microprocesseur peut également détecter une diminution de la vitesse de montée de la vitre sous l'effet de la présence d'un corps étranger, et commander l'inversion du sens de déplacement de ladite vitre pour éviter tout pincement. En plus de ce dispositif de détection indirecte, le dispositif de sécurité comprend un dispositif de détection directe comprenant un capteur de pression disposé dans le cadre de la porte.

L'inconvénient principal du dispositif de sécurité ci-dessus réside dans le fait que les moyens de détection indirecte continuent d'être utilisés comme moyens de détection d'obstacle même lorsque la vitre arrive à proximité de sa position de fermeture complète. En effet, on a déjà dit que la vitesse d'ascension de la vitre n'était pas constante et dépendait de nombreux paramètres. Ainsi, si en raison d'imprécisions de mesure, le microprocesseur n'indique pas que la vitre est fermée alors que celle-ci est effectivement fermée, ledit microprocesseur va interpréter cette situation comme une situation de pincement, et va commander l'arrêt et l'inversion du sens de marche du moteur d'entraînement. Il devient à ce moment impossible de fermer la vitre.

Les dispositifs de sécurité du genre susdécrit qui utilisent des capteurs de pression à fibre optique comme détecteurs d'obstacles présentent de nombreux inconvénients tant au niveau de leur fabrication industrielle qu'au niveau de leur fonctionnement chez l'utilisateur. Ces dispositifs de sécurité doivent, en effet, être produits à grande échelle pour satisfaire les besoins de marchés tels que celui de l'automobile. Ceci suppose donc un processus de fabrication à la fois simple et rapide avec des composants et des matériaux peu coûteux. Il en va de même pour les procédures de test et de calibration qui doivent être rapides et permettre aux moyens de détection directe et indirecte de conserver leurs caractéristiques de fonctionnement dans le temps. Comme on va le voir dans la description qui suit, il est difficile, dans de telles conditions, d'obtenir des produits ayant des caractéristiques homogènes.

Un premier problème est lié au fait qu'il est difficile de pouvoir disposer de quantités importantes et à bas coût de sources optiques présentant des caractéristiques peu dispersées. Ceci concerne notamment la puissance et l'angle d'émission ainsi que le spectre de rayonnement de ces sources.

Un second problème est lié au fait que la fibre optique utilisée dans le capteur doit être fixée à la source optique soit au moyen de connecteurs spécifiques, soit plus simplement par collage. Ceci nécessite plusieurs opérations de conditionnement de l'extrémité de la fibre (dénudage du revêtement, fracture ou polissage), de centrage de la fibre par rapport à la source optique, et enfin de fixation au moyen de résines à durcissement rapide. Une production à grande échelle implique forcément une dispersion importante des rendements à l'injection de puissance dans la fibre, ce qui affecte les performances du capteur.

Comme décrit ci-dessus, les capteurs à fibre optique fonctionnent dans leur majorité sur le principe des pertes induites par la variation du rayon de courbure de ladite fibre sous l'effet d'une pression. La mise en place de la fibre et le conditionnement de la partie sensible du capteur introduisent donc nécessairement une dispersion des contraintes dans la fibre optique, ce qui entraîne une dispersion des performances des capteurs.

On peut également noter que les performances des capteurs dépendent fortement des conditions dans lesquelles ils sont utilisés, et de leur environnement. C'est le cas, par exemple, des applications automobiles où les capteurs doivent fonctionner dans des plages de température ambiante comprises entre -40°C et +85°C. Il est clair que, dans de telles conditions, les caractéristiques de certains composants comme la source optique ne peuvent rester constantes (puissance d'émission et domaine spectral). Il en est de même pour le rendement à l'injection de puissance dans la fibre qui dépend fortement des propriétés thermiques des matériaux utilisés pour la connexion source-fibre.

Le problème est encore plus important au niveau de la partie sensible du capteur. En effet, en supposant que la fibre optique ne soit pas elle-même sensible aux variations de température, les matériaux qui servent de support et de gaine, en général des polymères, peuvent subir des contraintes thermiques, ce qui revient à appliquer des variations de pression sur la fibre. Ces effets, auxquels s'ajoute la sensibilité intrinsèque de la fibre optique à la température, peuvent entraîner des variations de plus de 80% du signal de sortie.

Enfin, aux problèmes liés aux conditions d'utilisation du capteur, s'ajoutent les variations inévitables des caractéristiques de celui-ci provoquées par l'usure normale des matériaux et des composants.

L'énumération des problèmes susmentionnés montre les difficultés qu'il s'agit de surmonter pour pouvoir fabriquer en grandes séries et à moindres coûts des capteurs de pression à fibre optique utilisables comme détecteurs d'obstacles. La sensibilité à certaines grandeurs perturbatrices ainsi que les phénomènes d'usure ne permettent pas de conserver la calibration d'origine. Il en résulte des problèmes de fiabilité voire, dans certains cas, de non fonctionnement des dispositifs de sécurité utilisant de tels capteurs.

Un procédé de commande séquentielle d'un panneau mobile entraîné à coulissement dans un cadre par un moteur électrique selon le préambule de la revendication 1 est déjà connu du document DE-A-196 23 420.

La présente invention a pour but de remédier aux problèmes et inconvénients susmentionnés en offrant un procédé fiable pour l'entraînement et la fermeture de panneaux d'obturation coulissant électriquement.

A cet effet, l'invention concerne un procédé de commande séquentiel d'un panneau mobile entraîné à coulissement dans un cadre par un moteur électrique ayant les caractéristiques de la revendication 1.

Ainsi, lors de la fermeture de la vitre, on peut déduire qu'en l'absence de signal d'alarme, la vitre est arrivée en butée contre le cadre de la porte et que tout risque d'accident est évité. Inversement, dans le cas de la présence d'un signal d'alarme, on commande immédiatement l'inversion du sens de marche du moteur d'entraînement. Grâce à ces caractéristiques, le procédé de détection séquentielle selon l'invention permet simultanément d'accroître la sécurité des personnes et de protéger efficacement les parties électriques et électroniques contre les surcourants.

Selon une autre caractéristique du procédé de l'invention, on mesure la fréquence des impulsions provoquées par la rotation du moteur électrique entraînant le panneau mobile, et on arrête ou on inverse le sens de marche dudit moteur lorsque la fréquence de ces impulsions devient inférieure à une fréquence seuil prédéterminée.

Selon encore une autre caractéristique du procédé, on détecte la présence d'un corps étranger susceptible de s'opposer à la fermeture complète du panneau mobile à l'aide d'un capteur de pression à fibre optique.

Selon encore une autre caractéristique du procédé de l'invention, on déduit de la mesure du nombre d'impulsions provoquées par la rotation du moteur électrique d'entraînement une indication de la course du panneau mobile à partir d'une position de référence connue préalablement, et on commande une rampe de décélération de la vitesse du moteur d'entraînement lorsque le panneau mobile arrive dans une zone de fin de course.

Selon encore une autre caractéristique, lorsque le panneau mobile arrive dans la zone de fin de course, les moyens qui servent à mesurer la fréquence des impulsions provoquées par la rotation du moteur électrique ne sont plus utilisés pour détecter la présence d'un obstacle susceptible de s'opposer à la fermeture complète du panneau mobile, mais seulement utilisés pour déterminer la position dudit panneau relativement au cadre à l'intérieur duquel il coulisse.

Selon encore une autre caractéristique du procédé, la position de référence est la dernière position calculée du panneau mobile avant l'arrêt du moteur d'entraînement.

La mesure du nombre d'impulsions provoquées par la rotation du moteur d'entraînement permet de calculer la course du panneau mobile à partir d'une position de référence préalablement connue. Dans le cas d'un véhicule automobile, du fait des forces d'inertie dues aux secousses, aux effets de friction et aux glissements, la détermination indirecte de la position de la vitre présente un certain taux d'erreur. Cé taux d'erreur est cumulatif. Ainsi, après dix essais de descente et de remontée de la vitre, l'écart cumulé entre la position calculée et la position réelle de ladite vitre est de l'ordre de un à deux centimètres. Cette erreur reste cependant suffisamment faible pour permettre de définir une zone de fin de course pour les mouvements de descente et de montée de la vitre, zone dans laquelle ladite vitre se trouve au voisinage du cadre de la porte contre lequel elle doit être appliquée. Le temps de retard mis par la variation du courant par rapport à la vitesse de rotation du moteur est mis à profit pour limiter les surcourants et pour protéger efficacement le moteur et son unité de commande.

L'invention concerne également un procédé de commande d'un panneau mobile entraîné à coulissement par un moteur électrique, caractérisé en ce qu'il consiste à mesurer la fréquence des impulsions provoquées par la rotation du moteur électrique entraînant le panneau mobile, et à arrêter ou à inverser le sens de marche dudit moteur lorsque la fréquence de ces impulsions devient inférieure à une fréquence seuil prédéterminée.

La fréquence des impulsions étant proportionnelle à la vitesse de rotation du rotor du moteur d'entraînement, il devient possible de détecter la présence d'un obstacle freinant le mouvement du panneau d'obturation et s'opposant à sa remontée. C'est le cas, par exemple, de l'action d'un bras posé sur le rebord d'une vitre d'un véhicule automobile. La comparaison de la vitesse mesurée avec une vitesse de référence permet donc d'effectuer une prédétection d'obstacle et d'éviter, dans certains cas, le pincement. Elle permet également de diminuer de manière notable les pics de courant qui sont particulièrement néfastes, notamment pour l'électronique de commande du moteur d'entraînement.

Selon encore une autre caractéristique du procédé de l'invention, on utilise un dispositif de sécurité comprenant des moyens de détection de la présence d'un corps étranger freinant le mouvement d'un panneau mobile entraîné à coulissement par un moteur électrique et s'opposant à sa fermeture, lesdits moyens de détection étant du type indirect, basés sur la mesure de la fréquence des impulsions provoquées par la rotation du moteur électrique.

Selon une autre caractéristique de l'invention, il est proposé d'associer aux moyens de détection du type indirect susmentionnés des seconds moyens de détection directe de la présence d'un corps étranger, ces moyens comprenant un capteur de pression constitué par une fibre optique associée à des moyens d'émission et de réception de signaux optiques se propageant à l'intérieur de ladite fibre.

Un autre aspect du procédé selon la présente invention a trait à la mise en oeuvre d'un capteur de pression à fibre optique utilisable comme détecteur d'obstacles conservant sa calibration d'origine malgré sa sensibilité à des grandeurs physiques perturbatrices telles que la température et aux phénomènes d'usure des matériaux qui le constituent.

A cet effet, selon un autre aspect de l'invention, on procède à la calibration d'un capteur de pression à fibre optique utilisé comme détecteur d'obstacles dans un système d'entraînement d'un panneau mobile coulissant électriquement, le capteur comprenant un émetteur alimenté électriquement qui injecte un signal lumineux dans une fibre optique, le signal lumineux se propageant jusqu'à un récepteur qui émet, en réponse au signal lumineux transmis par la fibre optique, un signal électrique vers une centrale de commande à microcontrôleur et/ou à microprocesseur qui analyse l'information en provenance dudit récepteur et permet, en cas d'incident, d'arrêter ou d'inverser le sens de marche d'un moteur électrique entraînant le panneau mobile, le procédé étant caractérisé en ce que, pendant les périodes où l'on constate l'arrêt du moteur d'entraînement du panneau mobile, on compare et on corrige les paramètres de fonctionnement du capteur de pression, pris dans des conditions d'environnement quelconques, en fonction des mêmes paramètres d'un capteur étalon pris dans des conditions de référence connues stockées dans une mémoire non volatile accessible au microcontrôleur et/ou au microprocesseur de la centrale de commande.

Grâce à ces caractéristiques, la procédure de calibration du capteur de pression débute dès l'instant où l'arrêt du moteur d'entraînement du panneau mobile est constaté. Préférentiellement, les paramètres de fonctionnement du capteur sont mesurés et corrigés de manière répétitive pendant toute la durée de la période d'arrêt dudit moteur d'entraînement. Durant les périodes de fonctionnement du moteur, seules les dernières corrections des paramètres de fonctionnement du capteur de pression stockées en mémoire seront prises en compte. Les performances du capteur de pression peuvent ainsi être conservées, malgré les phénomènes d'usure et l'existence de grandeurs physiques perturbatrices auxquelles le capteur est sensible.

Selon une première variante de mise en oeuvre, le procédé de l'invention comprend les étapes qui consistent à :

- couper un bref instant le courant électrique d'alimentation de l'émetteur dès l'instant où l'on constate l'arrêt du moteur d'entraînement du panneau mobile;
- mesurer le niveau d'offset du signal électrique émis par le récepteur, puis ramener sa valeur à zéro;
- alimenter à nouveau l'émetteur au moyen d'un courant électrique continu constant $I_0$, et
- mesurer le niveau de sortie $V_S$ du récepteur, et lui affecter un coefficient k tel que $kV_S = V_R$, où $V_R$ est un niveau de référence connu d'un capteur étalon pris dans des conditions de référence connues.

Selon une seconde variante de mise en oeuvre, le procédé de l'invention comprend les étapes qui consistent à :

- alimenter l'émetteur au moyen d'un courant rectangulaire périodique;
- mesurer le niveau haut de sortie $V_S$ du récepteur ainsi que sa variation $\Delta V_S$, et
- effectuer l'opération $V_S(\Delta V_S / \Delta V_R) = V'_S$ et déterminer le coefficient $C = V_R - V_S$ de façon que $V_S" = V_R$, où $V_R$ et $\Delta V_R$ sont des valeurs de référence connues d'un capteur étalon pris dans des conditions de référence connues, le rapport $\Delta V_S / \Delta V_R$ est le coefficient de correction de la sensibilité du capteur de pression, et C est le coefficient de correction de l'offset résiduel dudit capteur.

Selon une autre variante de mise en oeuvre, le procédé de l'invention comprend les étapes qui consistent à :

- alimenter l'émetteur au moyen d'un courant rectangulaire périodique;
- mesurer le niveau haut de sortie $V_S$ du récepteur, ainsi que sa variation $\Delta V_S$;
- calculer la pression appliquée en fonction du niveau de signal mesuré au moyen d'une équation polynomiale de degré supérieur ou égal à 1 dont les coefficients sont initialement déterminés lors d'une première calibration, et

- corriger périodiquement ces coefficients en fonction des résultats de la mesure pour obtenir une mesure fiable de la pression.

Selon un autre de ses aspects l'invention concerne également le procédé susdécrit caractérisé en ce que durant la seconde séquence, il comprend les étapes consistant à calibrer les seconds moyens en:

- mesurant, pour différentes positions du panneau mobile relativement au cadre dans lequel ledit panneau se déplace, la fréquence correspondante des impulsions provoquées par la rotation du moteur pour déterminer la vitesse de déplacement instantanée du panneau dans une position donnée, et
- comparant, pour chaque position du panneau mobile, la fréquence des impulsions mesurées à la fréquence de ces mêmes impulsions lors du trajet précédent dudit panneau mobile de sorte que, s'il existe une différence entre lesdites fréquences et que cette différence n'excède pas une valeur de sécurité prédéterminée, on corrige la fréquence seuil pour qu'elle ne commande pas l'arrêt et l'inversion du sens de marche du moteur.

D'autres caractéristiques et avantages de la présente invention apparaîtront plus clairement à la lecture de la description qui suit d'un exemple de mise en oeuvre du procédé selon l'invention, cet exemple étant donné à titre purement illustratif et non limitatif en liaison avec les dessins annexés sur lesquels :

- la figure 1 représente une portière d'un véhicule automobile munie du dispositif de sécurité selon l'invention;
- la figure 2 est une vue en coupe selon la ligne II-II de la figure 1;
- la figure 3 est une vue analogue à celle de la figure 2 sur laquelle on a représenté un corps étranger tel qu'un doigt coincé entre la vitre et le cadre de la porte;
- la figure 4 est une représentation schématique du dispositif de sécurité selon l'invention;
- la figure 5 est une représentation schématique d'un capteur de pression à fibre optique fonctionnant en mode transmission;
- la figure 6 est une représentation schématique d'un capteur de pression à fibre optique fonctionnant en mode réflexion;
- la figure 7 est une représentation schématique des moyens de commutation des états de marche-arrêt et de commande du sens de rotation du moteur ainsi que des moyens de détection de type indirect de la présence d'un corps étranger freinant le mouvement de la vitre du véhicule automobile;
- les figures 8 à 12 illustrent deux procédures d'autocalibration du système de sécurité selon l'invention;

- les figures 13 à 16 sont des vues en perspective de différentes variantes d'exécution du capteur de pression selon l'invention;
- la figure 17 est une vue générale en perspective du moteur électrique d'entraînement associé à un dispositif d'encodage optique;
- la figure 18 est une vue en perspective à l'état dissocié du moteur électrique d'entraînement et du dispositif d'encodage optique représentés à la figure 17;
- la figure 19 est une vue en perspective du moteur d'entraînement sur l'arbre duquel est monté un disque d'encodage optique associé à un dispositif opto-coupleur;
- la figure 20 est une vue de détail à plus grande échelle du disque d'encodage et du dispositif opto-coupleur représentés à la figure 19;
- la figure 21 est une vue en perspective d'un circuit imprimé sur la face inférieure duquel est fixé le dispositif opto-coupleur;
- la figure 22 est une vue en perspective montrant l'ouverture pratiquée dans le boîtier recevant l'arbre du moteur pour le passage du dispositif opto-coupleur, et
- la figure 23 est une vue de détail de l'ouverture pratiquée dans le boîtier représenté à la figure 22.

La présente invention procède de l'idée générale inventive qui consiste à procurer un procédé de commande séquentielle dans lequel les moyens de détection indirecte, basés sur la mesure de la fréquence des impulsions provoquées par la rotation du moteur électrique d'entraînement, permettent de protéger efficacement les éléments électriques et électroniques contre les pics de courant qui leur sont particulièrement néfastes, tandis que les moyens de détection directe, basés sur la mesure de la variation d'une grandeur physique sous l'effet de la présence d'un corps étranger s'opposant à la fermeture complète d'un panneau mobile, permettent d'accroître considérablement la sécurité des personnes.

La présente invention va être décrite en référence à un dispositif de lève-vitres électrique équipant un véhicule automobile. Il va néanmoins de soi que la présente invention s'applique à tout type de panneau mobile coulissant électriquement tel qu'un toit ouvrant d'un véhicule automobile, les portes d'un ascenseur, des portes coupe-feu ou autre.

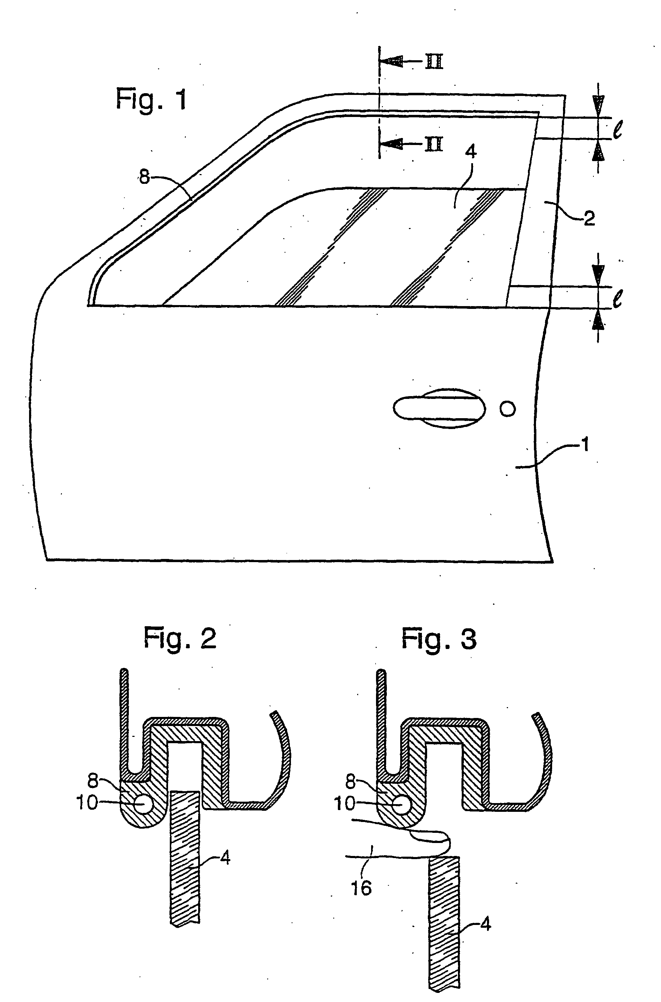

En référence aux figures 1 à 6, on voit une portière 1 d'un véhicule automobile ayant un cadre 2 dans lequel coulisse une vitre 4 sous l'action d'un moteur électrique d'entraînement 6. Le cadre 2 de la portière 1 est muni d'un joint d'étanchéité 8 dans une partie au moins duquel est disposé un guide optique 10 constitué, par exemple, par une fibre optique multimode. Comme cela sera décrit plus en détail par la suite, la fibre optique 10 est associée à des moyens d'émission et de réception respectivement 12 et 14 de signaux optiques se propageant à l'intérieur de ladite fibre 10. Ces moyens sont adaptés pour contrôler le fonctionnement du mécanisme de lève-vitres électrique ou du système antivol du véhicule qu'ils équipent.

Comme il ressort de la figure 2, la fibre optique 10 est placée dans la gamiture d'étanchéité 8 à l'extérieur du chemin de la vitre 4. La vitre 4 remontant sous l'action de son moteur d'entraînement 6, si un doigt 16 est coincé entre ladite vitre 4 et le cadre 2 de la portière 1 (figure 3), la fibre optique 10 est écrasée par le doigt 16. Sous l'effet de la pression exercée par le doigt 16, la fibre optique 10 se déforme, ce qui entraîne une modification locale de son rayon de courbure. Cette courbure entraîne une atténuation de la puissance des signaux optiques se propageant dans la fibre optique 10. Il en résulte une baisse de l'amplitude des signaux électriques émis par le récepteur 14 vers une unité centrale 18 qui, en réponse à cette baisse, élabore un signal d'arrêt ou d'inversion du sens de marche du moteur 6 entraînant la vitre 4.

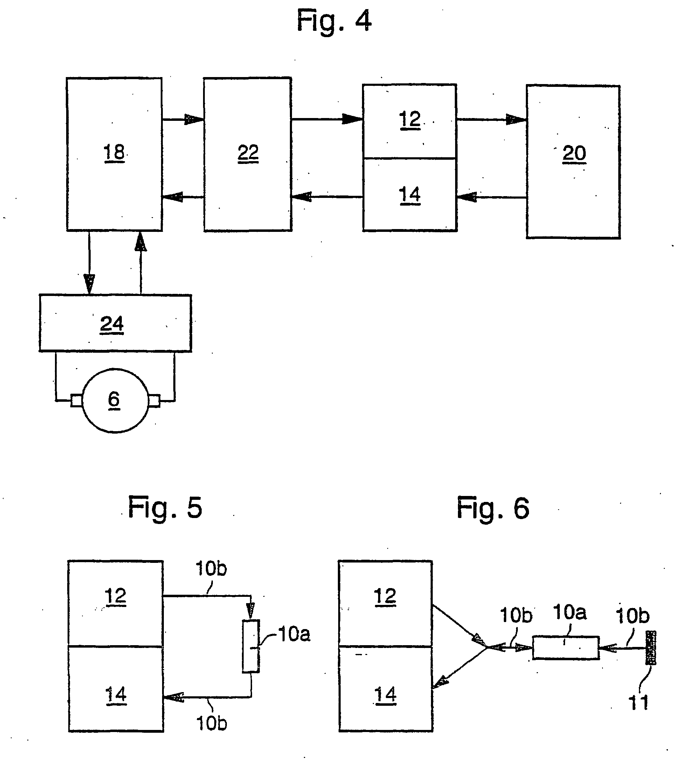

Sur la figure 4, on voit une représentation schématique du dispositif de sécurité selon l'invention. Un capteur de pression, désigné dans son ensemble par la référence numérique générale 20, comprend la fibre optique multimode 10 susmentionnée qui fonctionne sur le principe de la modulation d'intensité de la lumière qui s'y propage en fonction de la pression appliquée. Le capteur de pression 20 est associé aux moyens d'émission 12 et de réception 14 des signaux optiques se propageant à l'intérieur de ladite fibre 10.

Selon une première variante d'exécution représentée à la figure 5, le capteur de pression 20 fonctionne en mode transmission. La fibre optique 10 comprend une partie 10a qui constitue l'élément sensible du capteur de pression 20, et une partie 10b servant de ligne de transmission de la lumière. Les moyens d'émission 12 injectent un signal lumineux à une extrémité de la fibre 10. Ces moyens d'émission 12 comprennent une source optique qui est conditionnée de manière à être solidairement fixée à la fibre optique 10, ceci afin d'éviter l'utilisation de connecteurs optiques trop coûteux. La source optique sera de préférence une diode électroluminescente. Le signal lumineux injecté dans la fibre optique 10 se propage jusqu'au détecteur 14 tel qu'une photodiode également solidairement fixée à l'autre extrémité de ladite fibre 10.

. Selon une caractéristique particulièrement avantageuse de l'invention, la diode électroluminescente et la photodiode sont du type SMD (Surface Mount Device), serties dans un même boîtier recevant également les deux extrémités de la fibre optique 10 formant le capteur de pression 20. Le boîtier comporte d'autre part des moyens de connexion facilitant son montage sur une carte électronique.

Selon une seconde variante d'exécution représentée à la figure 6, le capteur de pression 20 peut également fonctionner en mode réflexion. Dans ce dernier cas, la source 12 et le récepteur 14 sont situés à une même extrémité de la fibre 10, tandis qu'un réflecteur 11 réfléchissant les signaux lumineux est disposé à l'autre extrémité de ladite fibre 10. Les fonctions d'émission et de réception sont préférentiellement assurées par une diode laser munie de sa propre cellule photodétectrice.

Un circuit d'alimentation 22 alimente la source optique 12 en courant. Ce courant peut être continu et/ou variable périodiquement dans le temps. Selon une caractéristique préférentielle de l'invention, le courant sera continu durant les périodes de fonctionnement du moteur d'entraînement 6, et de forme rectangulaire périodique durant les périodes d'arrêt. Le circuit 22 comporte également des circuits de conversion et d'amplification des courants issus du détecteur 14.

Le dispositif de sécurité selon l'invention comprend également un circuit de commande 24 du moteur d'entraînement 6. Ce circuit de commande 24 a une structure de type pont pour le contrôle bidirectionnel dudit moteur 6. Il peut être constitué entièrement à base de semi-conducteurs ou comporter des relais. L'utilisation de transistors de type MOS permet de commuter les relais avec un courant très faible, ce qui améliore la durée de vie des composants: Un autre avantage réside dans le fait que le même composant MOS peut être utilisé comme élément de mesure du courant afin de limiter ce dernier, de détecter les fins de course et de protéger le moteur 6 contre les pics de courant.

Le système ci-dessus est géré par l'unité centrale 18 susmentionnée. Cette unité centrale 18 comprend un microcontrôleur et/ou un microprocesseur qui gère les fonctions de contrôle, de mesure et de calibration du capteur de pression 20 au moyen de programmes et d'algorithmes informatiques implantés dans une mémoire non volatile accessible audit microcontrôleur. L'unité centrale 18 dispose pour cela de moyens de conversion analogique-digitale. Le contrôle par l'unité centrale 18 des états d'arrêt et de marche ainsi que du sens de rotation du moteur d'entraînement 6 s'effectue par l'intermédiaire du circuit de commande 24. Ce dernier mesure et transmet également à l'unité centrale 18 les variations du courant d'alimentation du moteur 6 afin de détecter les positions de fin de course de la vitre 4 et de protéger l'électronique contre les pics de courant qui en résultent, comme cela sera décrit plus en détail par la suite.

L'unité centrale 18 gère également l'état des entrées-sorties 26 en provenance ou à destination d'autres organes internes ou externes au système. On sait, en effet, que les microcontrôleurs actuels peuvent gérer un grand nombre d'entrées-sorties, ce qui permet au système d'interagir avec plusieurs centres de commande ou de contrôle. Ceci confère au système une grande souplesse d'utilisation et d'adaptation en fonction des applications recherchées. Parmi les commandes d'entrées-sorties, on peut citer :

- les commandes manuelles pour le passager principal et les autres passagers. Ces commandes peuvent être du type graduel. Elles peuvent également être à action rapide, au sens ou une simple pression commande l'ouverture ou la fermeture complète de la vitre 4;

- les commandes centralisées de fermeture de tous les panneaux. Ces commandes peuvent être manuelles, provenir de l'ordinateur central ou du système de fermeture centralisée des. portes;

- une fonction d'alarme (sécurité) dans le cas de l'introduction d'un objet entre la vitre et la coulisse.

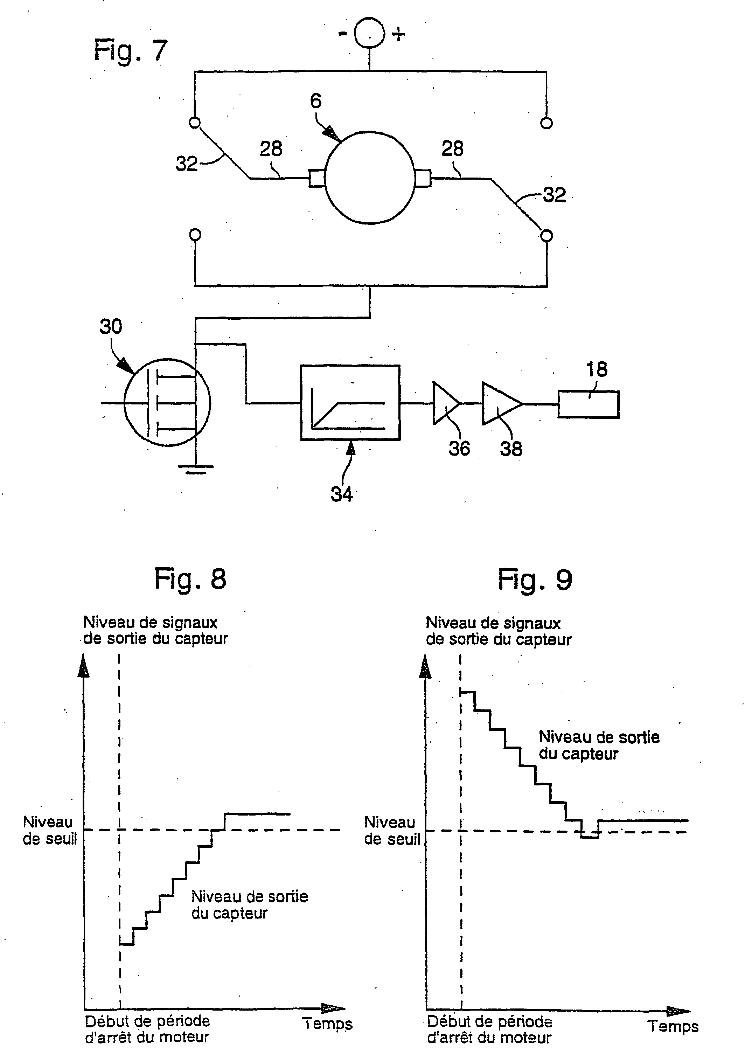

Conformément à un premier aspect du procédé selon l'invention, on mesure la fréquence des impulsions provoquées par la commutation des balais tels que 28 du moteur électrique 6 entraînant la vitre 4, et on arrête l'entraînement de ladite vitre 4 lorsque la fréquence des impulsions est inférieure à une fréquence seuil prédéterminée. A cet effet, on dispose de moyens de détection du type indirect, basés sur la mesure de la fréquence des impulsions provoquées par la commutation des balais 28 du moteur d'entraînement 6. Comme on le voit sur la figure 7, ces moyens de détection comprennent un transistor MOS 30 aux bornes duquel sont recueillies les impulsions provoquées par la commutation des balais 28. Selon une caractéristique complémentaire de l'invention, le transistor MOS 30 commande en outre la commutation des relais tels que 32 du moteur électrique 6, et détermine donc le sens de déplacement du panneau mobile 4. Les impulsions recueillies aux bornes du transistor MOS 30 passent ensuite à travers un filtre 34, un amplificateur 36, puis sont remises en forme au moyen d'un comparateur 38. Finalement, les impulsions sont envoyées vers des moyens de comparaison permettant de comparer la fréquence des impulsions à une fréquence seuil. Ces moyens sont constitués par l'unité centrale 18 qui calcule la fréquence des impulsions et la compare à la fréquence seuil stockée en mémoire. Finalement, lorsque la fréquence des impulsions devient inférieure à la fréquence seuil, l'unité centrale 18 produit un deuxième signal d'alarme qui la conduit à arrêter ou à inverser le sens de marche du moteur d'entraînement 6. Il devient ainsi possible de détecter la fin de course ou la présence d'un corps étranger tel que, par exemple, un bras freinant le mouvement de la vitre 4 et s'opposant à sa remontée. La comparaison de la fréquence mesurée avec une fréquence de référence permet donc d'effectuer une prédétection d'obstacle et d'éviter, dans certains cas, le pincement. Elle permet aussi de protéger le moteur d'entraînement 6 ainsi que son circuit de commande 24 contre les pics de courant particulièrement néfastes.

Selon un second aspect du procédé, l'unité centrale 18 compte le nombre d'impulsions provoquées par la commutation des balais 28 du moteur d'entraînement 6 et en déduit la position de la vitre 4 depuis une position de repos prise comme référence. Cette position de référence correspond à la dernière position calculée de la vitre 4 avant l'arrêt du moteur d'entraînement 6. Ainsi, lorsque la vitre 4 arrive dans une zone de fin de course à une distance l du bord supérieur ou inférieur du cadre 2 de la portière 1 dans lequel ladite vitre 4 coulisse, l'unité centrale 18 constitue les moyens qui permettent de programmer une rampe de décélération de la vitesse du moteur d'entraînement 6, et de couper l'alimentation de ce dernier lorsque la fréquence des impulsions devient sensiblement nulle. Sachant que la variation du courant d'alimentation du moteur 6 présente un retard par rapport à la vitesse de rotation dudit moteur 6 selon une constante de temps $\tau = L/R$ (où L est l'inductance et R la résistance du moteur d'entraînement 6), la commande d'une rampe de décélération et l'arrêt du moteur 6 lorsque la fréquence des impulsions devient sensiblement nulle permet de protéger efficacement le moteur 6 ainsi que son circuit de commande 24 contre les surcourants.

La méthode de détermination indirecte de la position de la vitre 4 décrite ci-dessus présente cependant un inconvénient. En effet, lorsque la vitre 4 arrive dans sa position de fin de course et que son moteur d'entraînement 6 s'arrête, il n'est pas possible de déterminer si cet arrêt est dû au fait que la vitre 4 est en butée contre le cadre 2 de la portière 1 dans lequel elle coulisse, ou si l'arrêt est dû à la présence d'un corps étranger coincé entre la vitre 4 et le montant dudit cadre 2. C'est pourquoi, on utilise des moyens de détection directe de la présence d'un corps étranger, ces moyens comprenant le capteur de pression 20 à fibre optique 10 décrit précédemment Ainsi, lors de la fermeture de la vitre 4, on peut déduire qu'en l'absence de signal d'alarme provenant du capteur de pression 20, la vitre 4 est arrivée en butée de fin de course contre le montant du cadre 2, et que tout risque d'accident est évité. Inversement, si le capteur de pression 20 produit un signal d'alarme, l'unité centrale 18 commande immédiatement l'inversion du sens de marche du moteur d'entraînement 6.

La présente invention a également pour but de fournir un procédé de détection séquentielle du genre susdécrit fonctionnant selon un mode séquentiel lui conférant une sécurité intrinsèque.

Au sens de l'invention, on entend par sécurité intrinsèque la mise en oeuvre de moyens et de différentes opérations qui vont permettre à l'unité centrale 18 d'effectuer tous les tests et réglages permettant d'assurer un fonctionnement fiable des moyens de détection directe et indirecte et de conférer à l'ensemble du dispositif selon l'invention un niveau de sécurité accru. Il est, de ce fait, nécessaire de prévoir des périodes durant lesquelles l'unité centrale 18 va exécuter de manière séquentielle un certain nombre d'opérations de test, de réglage et de commande. On distingue trois périodes de fonctionnement distinctes selon que la vitre 4 est au repos, qu'elle monte ou qu'elle descend.

Durant la période où le moteur d'entraînement 6 de la vitre 4 est à l'arrêt, l'unité centrale 18 teste et calibré les moyens de détection directe et indirecte d'obstacles. Plus précisément, les opérations effectuées périodiquement ou en continu durant cette première phase débutent par un test du bon fonctionnement général des moyens de détection. En cas de dysfonctionnement de l'un des moyens de détection, l'unité centrale 18 désactive le moyen défaillant. Si une défaillance générale des moyens de détection survient, l'unité centrale 18 émet une alarme, par exemple visuelle ou sonore, à l'attention de l'utilisateur. Celui-ci est alors informé que le système de lève-glace électrique fonctionne en mode manuel, et qu'il ne peut plus se fier aux moyens de détection d'obstacles selon l'invention. Il doit donc faire preuve d'une vigilance accrue. Si le bon fonctionnement général des moyens de détection est constaté, l'unité centrale 18 procède ensuite à une correction des paramètres de fonctionnement desdits moyens de détection en fonction des modifications subies par le dispositif de sécurité sous l'effet de l'évolution dans le temps du rendement du moteur 6 et des moyens de transmission, des frictions de la vitre 4 contre le joint d'étanchéité 8, des conditions climatiques ou autres.

Pendant la phase d'ascension de la vitre 4 et jusqu'à ce que celle-ci arrive au voisinage de la zone de fin de course à une distance l du bord supérieur du cadre 2 de la portière 1 dans lequel ladite vitre 4 coulisse, les moyens de détection directe génèrent un signal optique qui parcourt la partie supérieure dudit cadre 2. Ce signal optique est capté par le récepteur 14 puis transmis à l'unité centrale 18 qui en mesure l'intensité et la compare avec une valeur de référence définie lors de la phase de repos de la vitre 4. Dans le même temps, les moyens de détection indirecte détectent les impulsions provoquées par la commutation des balais 28 du moteur d'entraînement 6, puis envoient ces impulsions vers l'unité centrale 18 qui en calcule la fréquence et compare cette fréquence calculée à la fréquence seuil définie lors de la phase de repos de la vitre 4. La mesure du nombre des impulsions susmentionnées permet également à l'unité centrale 18 de calculer la position de la vitre 4. Finalement, l'unité centrale 18 commande l'arrêt puis l'inversion du sens de marche du moteur d'entraînement 6 en cas de non conformité de l'une quelconque des informations émises par l'un des deux dispositifs de détection directe ou indirecte avec la valeur de référence correspondante.

Pendant la phase d'ascension de la vitre 4 jusqu'à la position de fin de course dans laquelle elle vient en butée contre la partie supérieure du cadre 2 de la portière 1 dans lequel elle coulisse, les moyens de détection directe continuent à jouer le même rôle que ci-dessus. Ils génèrent un signal optique qui parcourt la partie supérieure du cadre 2 et qui est transmis, via le récepteur 14, à l'unité centrale 18 qui en mesure l'intensité et la compare avec une valeur de référence définie lors de la phase d'arrêt du moteur d'entraînement 6. En cas de non conformité de l'information émise par les moyens de détection directe avec la valeur de référence correspondante, l'unité centrale 18 commande l'arrêt et l'inversion du sens de marche du moteur d'entraînement 6. En revanche, les informations fournies par les moyens de détection indirecte ne sont plus utilisées pour détecter la présence d'un obstacle susceptible d'empêcher la fermeture complète de la vitre 4. Les moyens de détection indirecte détectent les impulsions provoquées par la commutation des balais 28 du moteur d'entraînement 6, puis envoient ces impulsions vers l'unité centrale 18. L'unité centrale 18 calcule alors la fréquence et le nombre de ces impulsions et en déduit les paramètres de vitesse et de position de la vitre 4 dont elle compare les valeurs avec des valeurs définies lors de la phase d'arrêt du moteur d'entraînement 6. L'unité centrale 18 commande ensuite une rampe de décélération de la vitesse d'ascension de la vitre 4 définie lors de la phase d'arrêt du moteur 6 et coupe l'alimentation de celui-ci lorsque les paramètres de vitesse et de position correspondent chacun à leur valeur de référence définie lors de la première phase.

Finalement, il faut considérer la phase de descente de la vitre 4 dans laquelle les moyens de détection directe sont désactivés. Quant aux moyens de détection indirecte, ils ont pour fonction de générer des impulsions et de mesurer la fréquence de ces impulsions pour calculer les paramètres de vitesse et de position de la vitre 4 et les comparer avec des valeurs définies lors de la phase d'arrêt du moteur d'entraînement 6. L'unité centrale 18 fait ralentir la progression de la vitre 4 selon une rampe de décélération programmée lors de la première phase où le moteur 6 est à l'arrêt et coupe l'alimentation de ce moteur 6 lorsque les paramètres de position et de vitesse de la vitre 4 atteignent respectivement leurs valeurs de référence définies lors de ladite première phase.

La présente invention a également pour but de s'assurer qu'un capteur de pression 20 conserve ses performances d'origine malgré sa sensibilité à des grandeurs physiques perturbatrices telles que la température et aux phénomènes d'usure des matériaux qui le constituent. A cet effet, il est proposé, pendant les périodes où l'unité centrale 18 constate l'arrêt du moteur d'entraînement 6, de comparer et de corriger les paramètres de fonctionnement du capteur de pression 20, pris dans des conditions d'environnement quelconques, en fonction des mêmes paramètres d'un capteur étalon pris dans des conditions de référence connues stockées dans une mémoire non volatile accessible au microcontrôleur de ladite unité centrale 18. Préférentiellement, les paramètres de fonctionnement du capteur de pression 20 sont mesurés et corrigés de manière répétitive pendant toute la durée de la période d'arrêt du moteur d'entraînement 6. Lors de la remise en marche du moteur d'entraînement 6, seules les dernières corrections des paramètres de fonctionnement du capteur 20 seront prises en compte.

Selon une première variante de mise en oeuvre, le procédé de calibration du capteur de pression 20 comprend les étapes qui consistent à :

- couper un bref instant le courant électrique d'alimentation de l'émetteur 12 dès l'instant où l'unité centrale 18 constate l'arrêt du moteur d'entraînement 6;
- mesurer le niveau d'offset du signal électrique émis par le récepteur 14, puis ramener sa valeur à zéro au moyen d'un algorithme stocké en mémoire du microcontrôleur de l'unité centrale 18;
- alimenter à nouveau l'émetteur 12 au moyen d'un courant électrique continu constant $I_O$, et
- mesurer le niveau de sortie $V_S$ du récepteur 12, et lui affecter un coefficient k tel que $kV_S = V_R$, où $V_R$ est un niveau de référence connu d'un capteur étalon pris dans des conditions de référence connues.

Lorsque l'émetteur 12 n'est pas alimenté, le signal de sortie du capteur de pression 20 n'est pas nul. En effet, le circuit de détection du capteur 20 est en général composé d'un photodétecteur 14 suivi d'un circuit d'amplification comprenant un amplificateur opérationnel. Or, tout photodétecteur présente un courant dit d'obscurité dépendant de sa technologie, de son courant de polarisation et de la température. Ce courant qui fluctue dans le temps est amplifié et contribue en partie à la génération d'une tension parasite d'offset en sortie. De plus, tout amplificateur opérationnel présente un signal d'offset en tension et courant non nul, avec une dérive plus ou moins importante selon la qualité du composant et les conditions de température. A moins d'utiliser des composants très stables et donc très coûteux, il est préférable de mesurer périodiquement ces valeurs d'offset et de les retrancher au moyen d'un programme informatique stocké dans la mémoire du microcontrôleur de l'unité centrale 18, pour ne conserver que le signal utile provenant du capteur de pression 20. Une fois le signal d'offset retranché, il faut, en l'absence de toute pression, ramener périodiquement le niveau du signal du capteur de pression 20 à un niveau de référence, de manière à opérer avec un seuil de déclenchement fixe. On peut ainsi s'affranchir des dispersions des caractéristiques de fonctionnement des composants (source 12 et détecteur 14), des conditions d'injection du signal optique dans la fibre 10, et des fluctuations de ce dernier liées à ladite fibre.

Selon une seconde variante de mise en oeuvre, le procédé de calibration du capteur de pression 20 comprend les étapes qui consistent à :

- alimenter l'émetteur 12 au moyen d'un courant rectangulaire périodique;
- mesurer le niveau haut de sortie $V_S$, et
- effectuer l'opération $V_S(\Delta V_S/\Delta V_R) = V_S'$ et déterminer le coefficient $C = V_R - V_S'$ de façon que $V_S''= V_R$, où $V_R$ et $\Delta V_R$ sont des valeurs de référence connues d'un capteur étalon pris dans des conditions de référence connues, le rapport $\Delta V_S/\Delta V_R$ est le coefficient de correction de la sensibilité du capteur de pression 20, et C est le coefficient de correction de l'offset résiduel dudit capteur 20.

Selon une caractéristique préférentielle du procédé de l'invention, l'émetteur 12 est alimenté au moyen d'un courant rectangulaire périodique obtenu en superposant à un courant constant $I_O$ une faible variation $\Delta I_O$ périodique, de telle sorte que la variation du signal optique qui en résulte puisse être considérée comme linéaire.

Pour des pressions appliquées faibles, le signal détecté peut être considéré comme linéaire et s'écrire sous la forme $V_S = I_O$ GT où :

- G tient notamment compte du gain global du capteur de pression 20, du rendement d'injection et du rendement du détecteur 14;
- T représente la fonction de transfert optique du capteur de pression 20, et
- $I_O$ représente la puissance de la source 12 et donc, indirectement, son courant de polarisation.

En mesurant la variation $\Delta V_S$ en sortie du capteur de pression 20 suite à une variation faible $\Delta I_O$ du courant de polarisation, et en effectuant le rapport de ces deux grandeurs, on obtient une mesure de la fonction de transfert optique du capteur de pression 20, et donc de sa sensibilité. D'autre part, effectuer l'opération $V_S' = V_S(\Delta V_S/\Delta V_R)$ revient à normaliser la sensibilité du capteur de pression 20 pris dans des conditions d'environnement quelconques par rapport à la sensibilité d'un capteur étalon pris dans des conditions de référence. La correction d'offset supplémentaire C telle que $C + V_S' = V_R$ permet de compenser les différences résiduelles liées à la dispersion des caractéristiques des composants et à leurs variations en fonction des conditions d'environnement.

Selon une troisième variante de mise en oeuvre, le procédé de calibration de l'invention comprend les étapes qui consistent à :

- alimenter l'émetteur 12 au moyen d'un courant rectangulaire périodique;
- mesurer le niveau haut de sortie $V_S$ du récepteur 14, ainsi que sa variation $\Delta V_S$;
- calculer la pression appliquée en fonction du niveau de signal mesuré au moyen d'une équation polynomiale de degré supérieur ou égal à 1 dont les coefficients sont initialement déterminés lors d'une première calibration, et
- corriger périodiquement ces coefficients en fonction des résultats de la mesure pour obtenir une mesure fiable de la pression.

Préférentiellement, l'émetteur 12 est alimenté au moyen d'un courant rectangulaire périodique obtenu en superposant à un courant continu $I_O$ une faible variation périodique $\Delta I_O$.

Cette troisième procédure de calibration nécessite une première calibration du capteur de pression 20 qui permet de calculer la pression appliquée en fonction de la tension mesurée au moyen d'une approximation polynomiale de degré 3 ou 4. Cette méthode permet d'effectuer des corrections simples des coefficients du polynôme, ou des corrections plus élaborées au moyen d'algorithmes spécifiques.

Selon une autre variante encore, le procédé d'autocalibration peut utiliser la correction à courant de polarisation variable et à seuil de déclenchement constant illustrée aux figures 8 et 9. On voit, sur ces deux figures, que durant les périodes d'arrêt du moteur d'entraînement 6, on fait croître ou décroître, par exemple par échelon, le courant de polarisation de l'émetteur 12 jusqu'à ce que le niveau du signal de sortie du capteur de pression 20 soit sensiblement égal au niveau du seuil de déclenchement de l'alarme (à la résolution près du système). Lorsque cette condition est réalisée, on cale le niveau du courant de polarisation de l'émetteur 12 pour que le signal de sortie du capteur de pression 20 soit à une valeur connue, supérieure au niveau de seuil de déclenchement de l'alarme. Il est à noter que la tension de seuil du comparateur 38 peut ici être fixée soit par un circuit extérieur au microcontrôleur de l'unité centrale 18, soit par le microcontrôleur lui-même (par programmation).

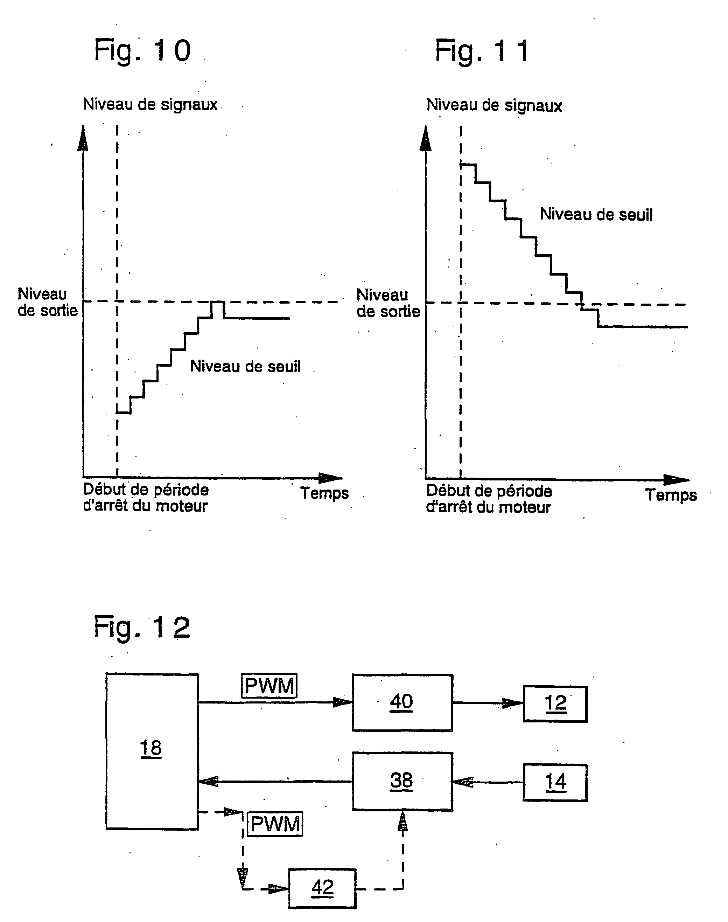

Selon une autre variante encore, le procédé de calibration peut utiliser la correction à seuil de déclenchement variable et à courant de polarisation fixe qui est illustrée par les figures 10 et 11. Dans ce cas, le courant de polarisation de l'émetteur 12 est constant, et on fait croître ou décroître, par exemple par échelon, la valeur du signal de seuil du comparateur 38 qui fixe le seuil d'alarme, jusqu'à ce que cette valeur devienne sensiblement égale à la valeur du signal de sortie du capteur de pression 20 (à la résolution près du système). Puis on cale le seuil à une valeur connue inférieure au signal de sortie. On voit, dans ce second cas, comment le microcontrôleur de l'unité centrale 18 commande un circuit extérieur pour ajuster le niveau de seuil de déclenchement de l'alarme. L'avantage, dans ce cas, est qu'il n'est pas nécessaire de mesurer le signal de sortie du capteur de pression 20 (et donc de munir le microcontrôleur d'un convertisseur analogique/numérique), ce qui permet de choisir des composants microcontrôleurs à bas coût. Mais il est à noter que le seuil peut également être fixé par programmation. Dans ce cas, il est nécessaire d'utiliser un convertisseur analogique/numérique pour pouvoir communiquer avec le microcontrôleur. Il faut également remarquer que l'ensemble des procédures d'autocalibration qui ont été décrites dans ce brevet peuvent être combinées entre elles.

Sur la base des procédés susdécrits, il est donc possible de corriger les paramètres de fonctionnement du capteur de pression 20 de deux manières distinctes, soit en corrigeant le courant de polarisation de l'émetteur 12, soit en corrigeant le seuil de déclenchement de l'alarme.

A cet effet, et comme représenté à la figure 12, le microcontrôleur de l'unité centrale 18, non muni d'un convertisseur analogique/numérique, élabore un signal PWM rectangulaire de fréquence fixe, mais avec des durées d'impulsions variables. On parle alors de modulation en durée des impulsions où PWM (Puise Width Modulation). Chaque valeur de durée peut être codée sur quatre ou huit bits ou plus par le microprocesseur. Le signal PWM est envoyé sur un intégrateur 40 du type filtre passe-bas qui transforme les impulsions en niveaux de tension distincts. On peut ainsi, en faisant varier le codage du signal PWM, programmer la forme et le niveau du courant de polarisation de l'émetteur 12. Il est également possible, au besoin, de modifier au moyen d'un intégrateur 42 la valeur du signal de seuil du comparateur 38 qui fixe le seuil d'alarme. Il existe également d'autres manières de modifier les signaux susmentionnés au moyen d'autres procédés de modulation. A titre d'exemple, on peut citer la modulation en fréquence des impulsions ou PFM (Pulse Frequency Modulation) ou la modulation codée des impulsions (Pulse Code Modulation).

La procédure d'autocalibration peut être étendue aux moyens de détection indirecte du système. En effet, il n'est pas établi que le procédé de détection indirecte soit toujours fiable dans le temps. Il faut s'attendre à ce que le rendement du moteur d'entraînement 6 et des éléments de transmission évoluent dans le temps. Il en est de même des frictions de la vitre 4 contre le joint d'étanchéité 8 qui peuvent évoluer sous l'effet des déformations du cadre 2 de la portière 1. De même, il faut s'attendre à ce que le mouvement de la vitre change selon la vitesse de déplacement du véhicule. Ne pas prendre en compte ces paramètres de perturbation pourrait conduire à un dysfonctionnement du système. Un suivi et une évaluation dans le temps de la vitesse de palier de la vitre 4 dans la zone où le mouvement de celle-ci est sensiblement uniforme, par exemple par la méthode des moyennes glissantes, pourrait permettre de corriger le calcul de la position de la vitre 4, ainsi que la valeur de la fréquence seuil pour la prédétection d'obstacles.

En dehors des phases d'accélération et de décélération du mouvement de la vitre, l'unité centrale 18 peut également enregistrer dans un tableau, pour différentes positions de ladite vitre 4, la fréquence correspondante des impulsions provoquées par la commutation des balais 28 du moteur d'entraînement 6. La mesure de la fréquence de ces impulsions renseigne l'unité centrale 18 sur la vitesse de déplacement de la vitre 4 lorsqu'elle passe dans une position donnée. Cette opération est renouvelée lors de chaque montée de la vitre 4. L'unité centrale 18 sait donc qu'à une position déterminée de la vitre 4 correspond une certaine vitesse d'ascension. L'unité centrale 18 va ensuite comparer, pour chaque position de la vitre 4, la fréquence des impulsions mesurée à la fréquence stockée en mémoire. Il se peut que sous l'effet du vieillissement des matériaux, de conditions climatiques particulières (humidité, température élevée ou au contraire particulièrement basse) ou d'autres phénomènes qui peuvent affecter le rendement du système, l'unité centrale 18 observe une certaine différence entre la fréquence mesurée et la fréquence mémorisée. Si cette différence n'excède pas un seuil de sécurité prédéterminé, l'unité centrale 18 comprend qu'une modification est survenue dans le fonctionnement du système et va corriger en conséquence la valeur de la fréquence seuil pour la prédétection d'obstacles.

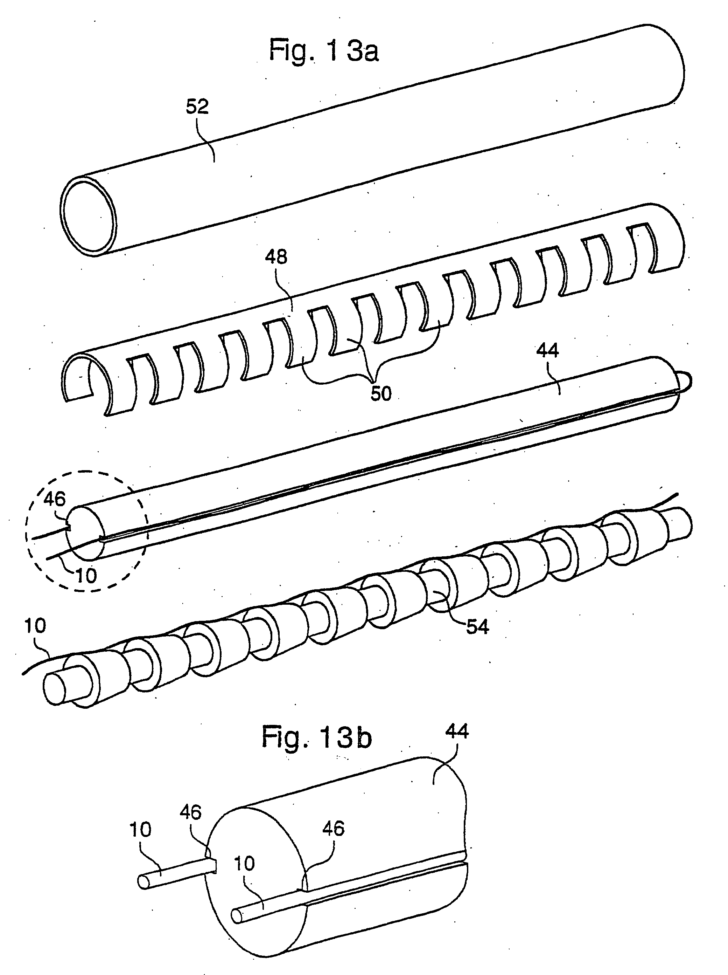

Un capteur de pression à fibre optique simple et peu coûteux à fabriquer et pouvant être utilisé pour la mise en oeuvre du procédé selon l'invention est représenté à la figure 13a. A cet effet, et comme on le voit sur la figure 13a, le capteur de pression selon l'invention comprend une âme centrale réalisée en une mousse ou en un caoutchouc souple qui se présente sous la forme d'un support 44 sensiblement cylindrique ou de forme allongée à section polygonale. On pratique à la surface du support 44 deux gorges telles que 46 diamétralement opposées qui s'étendent parallèlement à l'axe longitudinal dudit support 44 et dans lesquelles la fibre optique 10 vient se loger sans contrainte (voir la figure 13b qui est une vue de détail de la région de la figure 13a entourée d'un trait mixte). Le support cylindrique 44 et sa fibre optique 10 sont insérés dans une enveloppe 48 fendue longitudinalement et réalisée, par exemple, en un matériau plastique mince et dur dans lequel ont été découpées une pluralité de mâchoires de serrage telles que 50. Ces mâchoires 50 servent à courber la fibre optique 10 par pression élastique et à modifier localement son rayon de courbure. Le capteur de pression ainsi constitué est finalement enveloppé dans une gaine 52 réalisée en une mousse ou en un matériau très souple. Selon une variante également représentée à la figure 13a, l'âme centrale du capteur de pression selon l'invention peut être réalisée sous la forme d'un support 54 formé d'une succession périodique d'éléments tronconiques le long desquels la fibre optique 10 est fixée. Cette forme d'exécution a pour mérite d'améliorer la sensibilité du capteur en créant des microcourbures initiales.

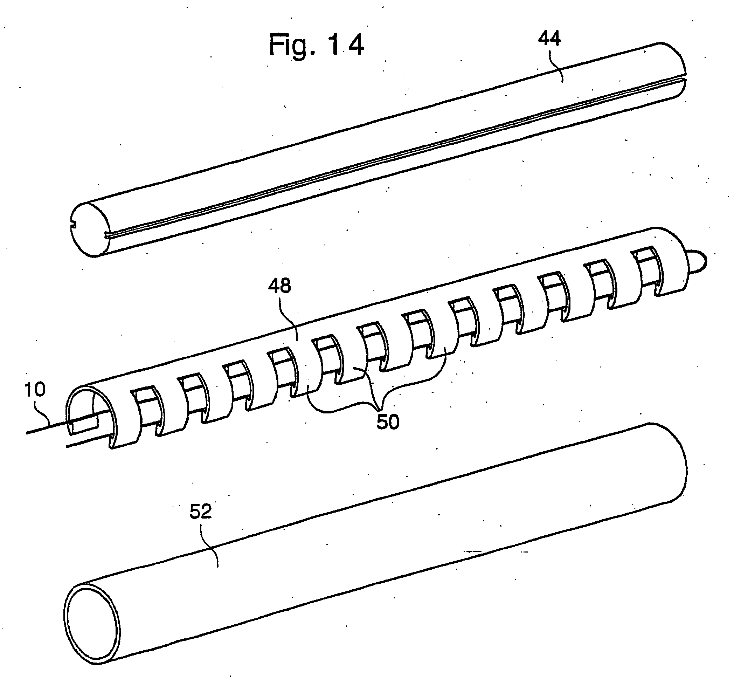

Selon une autre variante d'exécution représentée à la figure 14, la fibre optique 10 est montée directement sur la face intérieure des mâchoires 50 de l'enveloppe 48. A cet effet, l'extrémité libre desdites mâchoires 50 est légèrement recourbée afin de maintenir et de guider la fibre optique 10 le long de l'enveloppe 48. Cette forme d'exécution a comme avantage de maintenir la fibre optique 10 rectiligne. On a en effet constaté que plus la fibre optique employée dans de tels capteurs est courbée, moins longue est la durée de vie desdits capteurs.

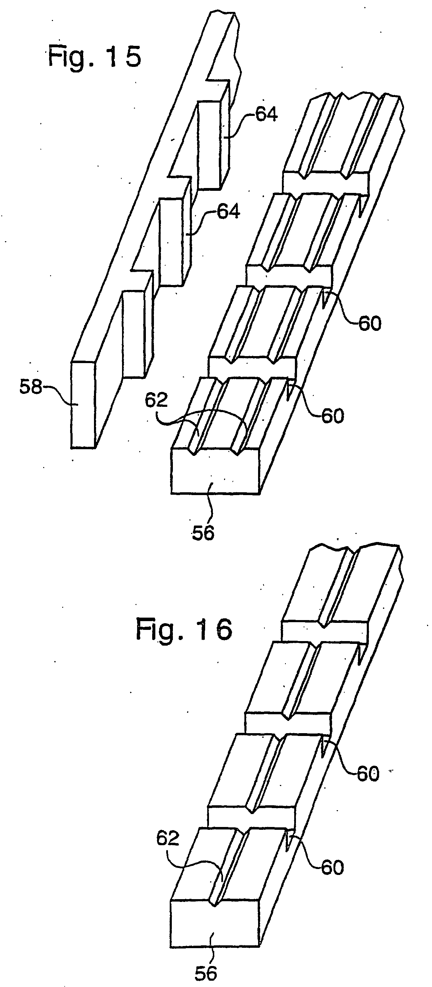

Selon encore une autre variante d'exécution représentée à la figure 15, la fibre optique 10 est prise en sandwich entre une première et une deuxième bandes respectivement 56 et 58 réalisées à partir de deux matériaux élastomères de même type mais de duretés différentes. La première bande 56, réalisée au moyen d'un matériau relativement dur, présente une succession de cavités transversales telles que 60 régulièrement réparties le long de ladite bande 56. Dans le cas d'un fonctionnement en mode transmission, la face supérieure de la bande 56 présente deux rainures telles que 62 dans lesquelles la fibre optique 10 vient se loger. Ces rainures 62 sont disposées parallèlement à et de part et d'autre de l'axe de symétrie longitudinal de la bande 56 et présentent un profil en V ou semi-circulaire. Les cavités 60 de la première bande 56 sont partiellement ou totalement comblées par des plots tels que 64 présentant une forme complémentaire à celle desdites cavités 60 et disposées en sous-face de la deuxième bande 58. Le matériau élastomère utilisé pour réaliser la deuxième bande 58 est du même type que celui employé pour la première bande 56, mais présente une dureté sensiblement plus faible. Ainsi, les première et deuxième bandes 56 et 58 sont complémentaires tant par la forme géométrique que pour l'alternance en dureté des matériaux. Finalement, la fibre optique 10 est logée entre les deux bandes 56 et 58 et peut conserver un profil rectiligne ou être légèrement et périodiquement courbée. Dans le cas d'un fonctionnement en mode réflexion, une seule rainure 62 est nécessaire (figure 16). Selon une variante, la deuxième bande 58 peut être plate, réalisée au moyen d'une certaine épaisseur d'un matériau élastomère sensiblement mou.

L'espacement des mâchoires 50 ou des cavités 60 définit la période de microcourbure. Pour obtenir une sensibilité optimale du capteur de pression, la période de microcourbure sera choisie de manière à obtenir un couplage fort entre les modes guidés dans le coeur de la fibre optique 10, et les modes rayonnés par la gaine.

Cette période optimale dépend des caractéristiques optogéométriques de la fibre optique 10 multimode utilisée. Si la fibre optique 10 est du type à saut d'indice, la période de microcourbure T doit vérifier la relation :

$$T \le \frac{2\pi\rho^2 k n_c}{1 + 2\rho k n_c \sqrt{\Delta}}$$

où $k = 2\pi/\lambda$ est le module du vecteur d'onde, $\rho$ et $n_c$ sont respectivement le rayon et l'indice de réfraction du coeur de la fibre 10, et $\Delta$ est la différence relative entre les indices de coeur et de gaine de la fibre optique 10.

Pour une fibre à gradient d'indice, la période de microcourbure optimale doit être une valeur multiple de la période T donnée par la relation :

$$T \leq \rho\pi\sqrt{\frac{2}{\Delta}}$$

où $\rho$ et $\Delta$ sont respectivement le rayon de coeur de la fibre 10 et la différence relative entre les indices de coeur et de gaine de la fibre optique 10.

La sensibilité à la pression étant plus importante dans le cas des fibres à gradient d'indice, c'est ce type de fibre qui sera choisi de préférence.

Selon une autre caractéristique de l'invention, la fibre optique 10 peut être du type plastique, entièrement constituée de matériaux polymères.

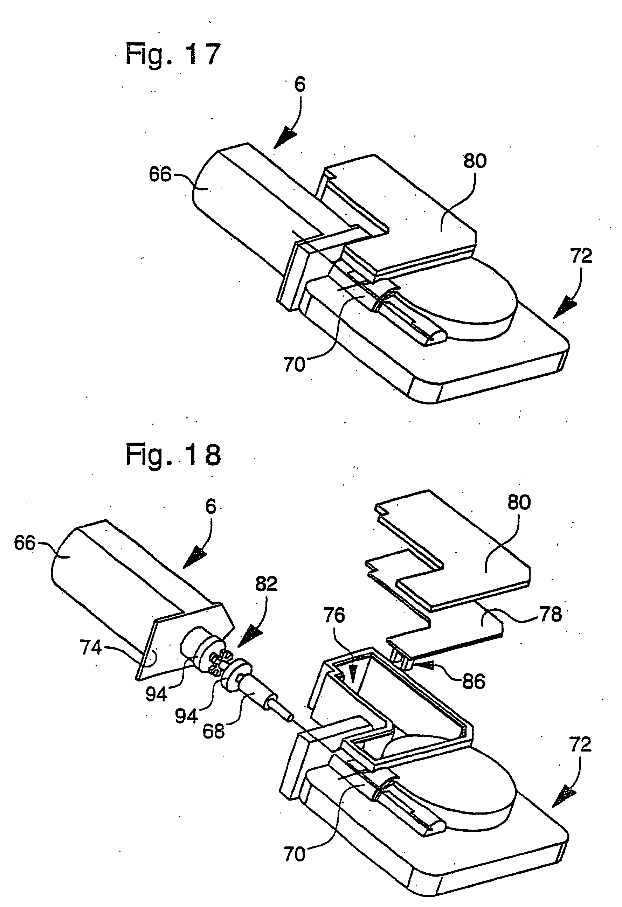

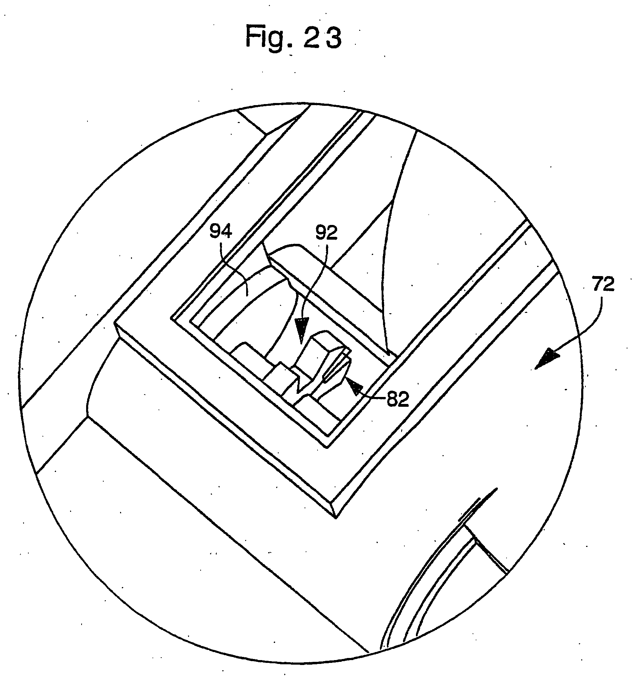

On a décrit en liaison notamment avec la figure 7 précédente un mode d'exécution des moyens de détection indirecte d'obstacles dans lequel on détecte la fréquence des impulsions provoquées par la commutation des balais 28 du moteur d'entraînement 6 (encodage électrique). Il va de soi que d'autres variantes de réalisation des moyens de détection indirecte peuvent être envisagées. A cet effet, on a représenté sur les figures 17 à 23 annexées à la présente demande de brevet un système d'encodage optique.

Comme il ressort des figures 17 et 18, le moteur électrique d'entraînement 6 est logé dans un carter 66 d'où émerge son arbre 68. Cet arbre 68 pénètre dans une ouverture 70 de forme générale cylindrique pratiquée dans un boîtier 72 contre lequel le carter 66 du moteur d'entraînement 6 est fixé au moyen d'une embase 74 sensiblement plane et de forme générale rectangulaire. Le boîtier 72 présente une cavité 76 dont le périmètre est adapté à la forme d'un circuit imprimé 78 qui est logé dans cette cavité 76. La cavité 76 est finalement refermée à l'aide d'un couvercle 80.

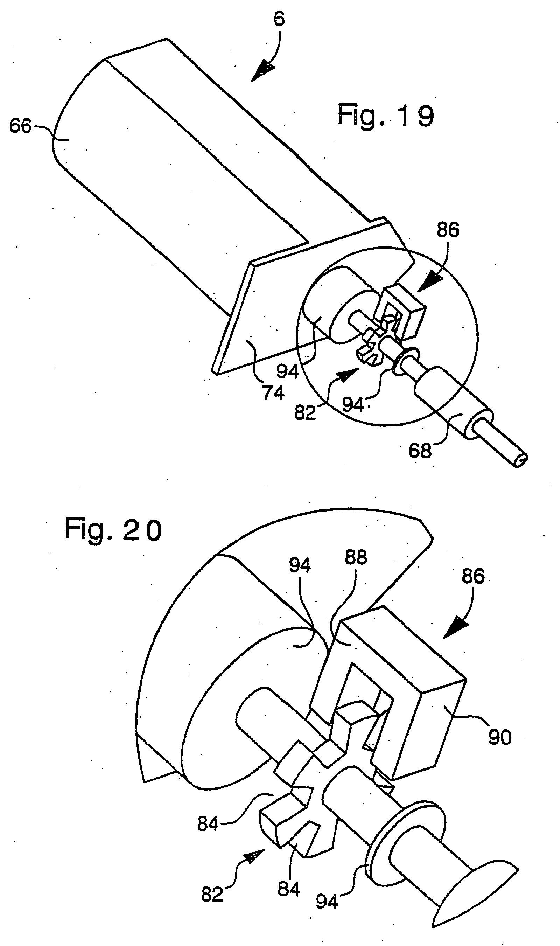

Conformément à la présente invention, un disque d'encodage 82 de faible épaisseur est monté solidaire sur l'arbre 68 du moteur d'entraînement 6 (voir figures 19 et 20). Ce disque 82 présente un certain nombre de fentes telles que 84 régulièrement espacées sur la périphérie dudit disque 82. On place en regard du disque 82 un dispositif opto-coupleur 86. Ce dispositif opto-coupleur 86 comprend un émetteur optique 88 et un récepteur optique 90 alignés selon un axe commun l'un par rapport à l'autre et séparés d'une distance suffisante pour laisser le passage au disque d'encodage 82. L'émetteur optique 88 envoie un faisceau lumineux vers le récepteur optique 90. Lorsque l'arbre 68 du moteur d'entraînement 6 tourne, il entraîne le disque d'encodage 82 en rotation. A chaque fois qu'une des fentes 84 du disque d'encodage 82 passe par l'axe reliant l'émetteur 86 au récepteur 88, la lumière va se propager dudit émetteur 88 audit récepteur 90. Le récepteur 90, sous l'effet de la lumière incidente, va émettre une impulsion électrique qui va être envoyée à l'unité centrale 18. On comprendra aisément que le nombre et la fréquence de ces impulsions sont respectivement proportionnels à la position et à la vitesse de déplacement de la vitre 4.

Le dispositif opto-coupleur 86 décrit ci-dessus fonctionne en mode de transmission du faisceau lumineux. On peut également envisager de faire fonctionner ce dispositif opto-coupleur 86 en mode réflexion. Dans ce cas, on dispose sur l'une des faces du disque d'encodage 82 une pluralité d'éléments réfléchissants disposés à intervalles de distance réguliers les uns des autres. L'émetteur 88 et le récepteur 90 sont alors placés côte à côte en regard des éléments réfléchissants.

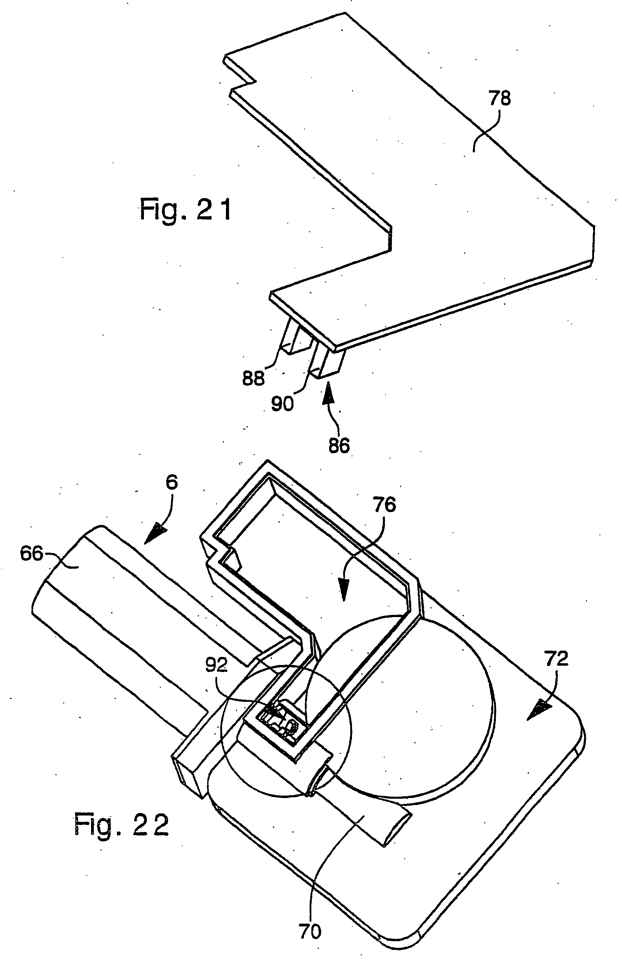

On voit sur les figures 21 à 23 que le dispositif opto-coupleur 86 est fixé sur la face inférieure du circuit imprimé 78. Lorsque le circuit imprimé 78 est inséré dans la cavité 76 du boîtier 72, le dispositif opto-coupleur 86 pénètre dans une ouverture 92 pratiquée dans la face supérieure dudit boîtier 72 et vient coiffer le disque d'encodage 82. On prévoit enfin deux joints d'étanchéité tournants tels que 94 placés en amont et en aval du disque d'encodage 82 et qui permettent d'assurer une étanchéité et une protection des composants optiques 88, 90 vis-à-vis des poussières et autres dépôts.

Selon encore une autre variante de réalisation, les moyens de détection indirecte sont constitués par un dispositif d'encodage magnétique. A cet effet, des éléments aimantés de faibles dimensions sont moulés à l'intérieur d'un cylindre en matériau polymère que l'on fixe sur l'arbre 68 du moteur d'entraînement 6. Un détecteur de champ magnétique tel qu'une sonde à effet Hall est placée à proximité de ce cylindre. La rotation du moteur 6 permet ainsi de produire des impulsions électriques dont le nombre et la fréquence sont respectivement proportionnels à la position et à la vitesse de la vitre 4.

Il va de soi que diverses variantes et modifications simples entrent dans le cadre de la présente invention tel que défini par les revendications.

**Revendications**

1. Procédé de commande séquentielle d'un panneau mobile (4) entraîné à coulissement dans un cadre (2) par un moteur électrique (6) comprenant une première séquence consistant à :

   - détecter à l'aide de premiers moyens la présence d'un corps étranger susceptible de s'opposer à la fermeture complète du panneau mobile (4) par coincement de ce corps étranger entre ledit panneau (4) et le cadre (2) à l'intérieur duquel le panneau (4) coulisse, ces premiers moyens étant susceptibles de produire une première alarme lorsque la présence dudit corps étranger est détectée, et
   - mesurer à l'aide de seconds moyens la fréquence des impulsions provoquées par la rotation du moteur électrique (6) entraînant le panneau mobile (4), et déduire de cette mesure une indication du déplacement du panneau mobile (4) à partir d'une position de référence connue préalablement, ces seconds moyens étant également susceptibles de détecter la présence du corps étranger lorsque la fréquence des impulsions devient inférieure à une fréquence seuil prédéterminée et de produire une seconde alarme lorsque cette présence est constatée,

ce procédé étant **caractérisé en ce que**, pendant la phase d'ascension du panneau mobile (4) et jusqu'à ce que celui-ci arrive au voisinage d'une zone de fin de course dans laquelle le panneau (4) n'a plus à parcourir qu'une distance (I) avant sa fermeture complète, on commande l'arrêt, puis l'inversion du sens de marche du moteur d'entraînement (6) en cas de réception du premier et/ou du second signal d'alarme, et **en ce que** pendant la montée du panneau mobile (4) sur la distance restante (I) jusqu'à sa fermeture complète, seuls les premiers moyens sont utilisés pour détecter la présence du corps étranger, tandis que les seconds moyens sont seulement utilisés pour déterminer la position dudit panneau (4) relativement au cadre (2) à l'intérieur duquel il coulisse.

**2.** Procédé selon la revendication 1, **caractérisé en ce que** l'on commande une rampe de décélération de la vitesse du moteur d'entraînement (6) lorsque le panneau mobile (4) arrive dans la zone de fin de course.

**3.** Procédé selon l'une quelconque des revendications 1 ou 2, **caractérisé en ce qu'**en l'absence du premier signal d'alarme, on arrête le moteur d'entraînement (6) lorsque le panneau mobile (4) est dans une zone de fin de course et que la fréquence des impulsions devient sensiblement nulle.

**4.** Procédé selon l'une quelconque des revendications 1 à 3, **caractérisé en ce que** la position de référence est la dernière position calculée du panneau mobile (4) avant l'arrêt du moteur d'entraînement (6).

**5.** Procédé selon l'une quelconque des revendications 1 à 4, **caractérisé en ce qu'**il comprend en outre une seconde séquence consistant, pendant les périodes où l'on constate l'arrêt du moteur d'entraînement (6) du panneau mobile (4), à calibrer les premiers moyens de détection en comparant et en corrigeant les paramètres de fonctionnement desdits premiers moyens de détection, pris dans des conditions d'environnement quelconques, en fonction des paramètres correspondants de moyens de détection étalons pris dans des conditions de référence connues.

**6.** Procédé selon l'une quelconque des revendications 1 à 5, **caractérisé en ce qu'**il comprend en outre une troisième séquence consistant, pendant la phase de descente du panneau mobile (4), à désactiver les premiers moyens de détection, tandis que les seconds moyens sont utilisés pour calculer les paramètres de vitesse et de position dudit panneau mobile (4) et les comparer avec des valeurs de référence définies lors de la phase d'arrêt du moteur d'entraînement (6), la progression dudit panneau mobile (4) étant ralentie puis arrêtée selon une rampe de décélération lorsque sa position et sa vitesse atteignent lesdites valeurs de référence.

**7.** Procédé selon l'une quelconque des revendications 1 à 6, **caractérisé en ce que** les premiers moyens de détection de la présence d'un corps étranger susceptible de s'opposer à la fermeture complète du panneau mobile (4) comprennent un capteur de pression (20) à fibre optique.

**8.** Procédé selon l'une quelconque des revendications 1 à 7, **caractérisé en ce que** la fréquence que l'on mesure à l'aide des seconds moyens est la fréquence des impulsions provoquées par la commutation des balais (28) du moteur électrique (6).

**9.** Procédé selon l'une quelconque des revendications 1 à 7, **caractérisé en ce que** la fréquence est la fréquence des impulsions produites par un dispositif d'encodage optique.

**10.** Procédé selon l'une quelconque des revendications 1 à 7, **caractérisé en ce que** la fréquence est la fréquence des impulsions produites par un dispositif d'encodage magnétique.

**11.** Procédé selon l'une quelconque des revendications 8 à 10, **caractérisé en ce que** les seconds moyens comprennent un transistor MOS (30) aux bornes duquel sont recueillies les impulsions provoquées par la commutation des balais (28) du moteur électrique (6), ces impulsions passant ensuite à travers un filtre (34) et un amplificateur (36), avant d'être remises en forme au moyen d'un comparateur (38).

**12.** Procédé selon la revendication 11, **caractérisé en ce que** le transistor MOS (30) commande en outre la commutation des relais (32) du moteur électrique (6), et détermine donc le sens de déplacement du panneau mobile (4).

**13.** Procédé selon l'une quelconque des revendications 9 à 12, **caractérisé en ce que** le dispositif d'encodage optique comprend un disque optique (82) ainsi qu'un émetteur optique (88) et un récepteur optique (90).

**14.** Procédé selon la revendication 13, **caractérisé en ce que** le disque optique (82) est monté sur l'arbre (68) du moteur (6) et présente une pluralité de fentes (84) régulièrement espacées sur la périphérie dudit disque (82), et **en ce que** l'émetteur optique (88) et le récepteur optique (90) sont alignés selon un axe commun l'un par rapport à l'autre et séparés d'une distance suffisante pour laisser le passage au disque (82).

**15.** Procédé selon la revendication 13, **caractérisé en ce que** le disque optique (82) est monté sur l'arbre (68) du moteur d'entraînement (6) et présente sur l'une de ses faces une pluralité d'éléments réfléchissants disposés à intervalles de distance réguliers les uns des autres, et **en ce que** l'émetteur optique (88) et le récepteur optique (90) sont placés côte à côte en regard des éléments réfléchissants.

**16.** Procédé selon l'une quelconque des revendications 10 à 15, **caractérisé en ce que** le dispositif d'encodage magnétique comprend une pluralité d'éléments aimantés disposés sur l'arbre (68) du moteur d'entraînement (6), un détecteur de champ magnétique étant placé à proximité desdits éléments aimantés.

**17.** Procédé selon la revendication 16, **caractérisé en ce que** le détecteur de champ magnétique est une sonde à effet Hall.

**18.** Procédé selon l'une quelconque des revendications 1 à 17, **caractérisé en ce que** des moyens de comparaison permettent de comparer la fréquence des impulsions provoquées par la rotation du moteur d'entraînement (6) du panneau mobile (4) à une fréquence seuil.

**19.** Procédé selon l'une quelconque des revendications 1 à 18, **caractérisé en ce que** des moyens permettent de programmer une rampe de décélération de la vitesse du moteur d'entraînement (6) du panneau mobile (4) lorsque ce dernier arrive dans la zone de fin de course.

**20.** Procédé selon les revendications 18 et 19, **caractérisé en ce que** les moyens de comparaison et de programmation de la rampe de décélération comprennent une unité centrale (18) à microcontrôleur et/ou à microprocesseur.

**21.** Procédé selon l'une quelconque des revendications 7 à 20, **caractérisé en ce que** le capteur de pression (20) est constitué par une fibre optique (10) associée à des moyens d'émission et de réception (12, 14) de signaux optiques se propageant à l'intérieur de ladite fibre (10), les moyens d'émission (12), alimentés électriquement, injectant un signal lumineux dans la fibre optique (10), le signal lumineux se propageant jusqu'aux moyens de réception (14) qui émettent, en réponse au signal lumineux transmis par ladite fibre optique (10), un signal électrique vers une centrale de commande (18) à microcontrôleur et/ou à microprocesseur qui analyse l'information en provenance desdits moyens de réception (14) et permet, en cas d'incident, d'arrêter ou d'inverser le sens de marche du moteur électrique (6) entraînant le panneau mobile (4).

**22.** Procédé selon la revendication 21, **caractérisé en ce que** le capteur de pression à fibre optique comprend une âme centrale qui se présente sous la forme d'un support (44) sensiblement cylindrique ou allongé et à section polygonale à la surface duquel sont pratiquées deux gorges (46) diamétralement opposées qui s'étendent parallèlement à l'axe longitudinal dudit support (44) et dans lesquelles la fibre optique (10) vient se loger sans contrainte, ledit support cylindrique (44) et sa fibre optique (10) étant insérés dans une enveloppe (48) fendue longitudinalement dans laquelle ont été découpées une pluralité de mâchoires de serrage (50), ces mâchoires (50) servant à courber la fibre optique (10) par pression élastique et à modifier localement son rayon de courbure, l'ensemble ainsi constitué étant finalement enveloppé dans une gaine (52).

**23.** Procédé selon la revendication 22, **caractérisé en ce que** ledit support (44) comporte une succession périodique d'éléments tronconiques le long desquels la fibre optique (10) est fixée.

**24.** Procédé selon l'une quelconque des revendications 22 ou 23, **caractérisé en ce que** la fibre optique est montée sur la face intérieure des mâchoires de serrage (50) de l'enveloppe (48), l'extrémité libre desdites mâchoires (50) étant recourbée afin de maintenir et de guider la fibre optique (10) le long de ladite enveloppe (50).

**25.** Procédé selon la revendication 21, **caractérisé en ce que** la fibre optique (10) est prise en sandwich entre une première et une deuxième bandes (56, 58), la première bande (56), réalisée en un matériau élastomère sensiblement dur, présentant une succession de cavités transversales (60) disposées le long de ladite bande (56) ainsi qu'au moins une rainure (62) dans laquelle la fibre optique (10) vient se loger, cette rainure (62) étant disposée parallèlement à l'axe de symétrie longitudinal de la bande (56), lesdites cavités (60) étant partiellement ou totalement comblées par des plots (64) présentant une forme complémentaire à celle desdites cavités (60) et disposées en sous-face de la deuxième bande (58), lesdits plots (64) étant réalisés en un matériau élastomère sensiblement plus mou que le premier.

**26.** Procédé selon l'une quelconque des revendications 22 à 25, **caractérisé en ce que** la fibre optique (10) est du type à saut d'indice, et **en ce que** la période de microcourbure T définie par l'espacement des mâchoires (50) ou des cavités (60) doit vérifier la relation :

$$T \leq \frac{2\pi\rho^2 k n_c}{1+2\rho k n_c \sqrt{\Delta}}$$

où $k = 2\pi/\lambda$ est le module du vecteur d'onde, $\rho$ et $n_c$ sont respectivement le rayon et l'indice de réfraction du coeur de la fibre (10), et $\Delta$ est la différence relative entre les indices de coeur et de gaine de la fibre optique (10).

**27.** Procédé selon l'une quelconque des revendications 22 à 25, **caractérisé en ce que** la fibre optique (10) est du type à gradient d'indice, et **en ce que** la période de microcourbure définie par l'espacement des mâchoires (50) ou des cavités (60) doit être une valeur multiple de la période T donnée par la relation :

$$T \leq \rho\pi\sqrt{\frac{2}{\Delta}}$$

où $\rho$ et $\Delta$ sont respectivement le rayon de coeur de la fibre (10) et la différence relative entre les indices de coeur et de gaine de la fibre optique (10).

**28.** Procédé selon l'une quelconque des revendications 22 à 27, **caractérisé en ce que** la fibre optique (10) est du type plastique.

**29.** Procédé selon l'une quelconque des revendications 21 à 28, **caractérisé en ce que** le capteur de pression (20) fonctionne en mode transmission.

**30.** Procédé selon l'une quelconque des revendications 21 à 28, **caractérisé en ce que** le capteur de pression (20) fonctionne en mode réflexion.

**31.** Procédé selon la revendication 29, **caractérisé en ce que** les moyens d'émission (12) comprennent une diode électroluminescente, et **en ce que** les moyens de réception (14) comprennent une photodiode.

**32.** Procédé selon la revendication 31, **caractérisé en ce que** la diode électroluminescente et la photodiode sont du type SMD.

**33.** Procédé selon la revendication 32, **caractérisé en ce que** la diode électroluminescente et la photodiode sont serties dans un même boîtier recevant également les deux extrémités de la fibre optique (10) formant le capteur de pression (20), ce boîtier étant d'autre part muni de moyens de connexion facilitant sa fixation sur une carte électronique.

**34.** Procédé selon la revendication 30, **caractérisé en ce que** les fonctions d'émission (12) et de réception (14) sont assurées par une diode laser munie de sa propre cellule photodétectrice.

**35.** Procédé selon l'une quelconque des revendications 21 à 34, **caractérisé en ce que** la fibre optique (10) est disposée le long d'au moins un bord d'une ouverture (2) destinée à être obturée par le panneau mobile (4).

**36.** Procédé selon l'une quelconque des revendications 21 à 35, **caractérisé en ce qu'**il comprend les étapes qui consistent à :

- couper durant un bref instant le courant électrique d'alimentation de l'émetteur (12) dès l'instant où l'on constate l'arrêt du moteur d'entraînement (6) du panneau mobile (4);
- mesurer le niveau d'offset du signal électrique émis par le récepteur (14), puis ramener sa valeur à zéro;
- alimenter à nouveau l'émetteur (12) au moyen d'un courant électrique continu $I_0$, et
- mesurer le niveau de sortie $V_S$ du récepteur (14), et lui affecter un coefficient k tel que $kV_S = V_R$ , où $V_R$ est un niveau de référence connu d'un capteur étalon pris dans des conditions de référence connues.

**37.** Procédé selon l'une quelconque des revendications 21 à 35, **caractérisé en ce qu'**il comprend les étapes qui consistent à :

- alimenter l'émetteur (12) au moyen d'un courant rectangulaire périodique;
- mesurer le niveau haut de sortie $V_S$ du récepteur (12) ainsi que sa variation $\Delta V_S$, et
- effectuer l'opération $V_S(\Delta V_R/\Delta V_S) = V'_S$ et déterminer le coefficient $C = V_R - V_S'$ de façon que $V_S''= V_R$, où $V_R$ et $\Delta V_R$ sont des valeurs de référence connues d'un capteur étalon pris dans des conditions de référence connues, le rapport $\Delta V_R/\Delta V_S$ est le coefficient de correction de la sensibilité du capteur de pression (20), et C est le coefficient de correction de l'offset résiduel dudit capteur (20).

**38.** Procédé selon la revendication 37, **caractérisé en ce qu'**il comprend les étapes qui consistent à :

- alimenter l'émetteur (12) au moyen d'un courant rectangulaire périodique;

- mesurer le niveau haut de sortie $V_S$ du récepteur (14), ainsi que sa variation $\Delta V_S$;
- calculer la pression appliquée en fonction du niveau de signal mesuré au moyen d'une équation polynomiale de degré supérieur ou égal à 1 dont les coefficients sont initialement déterminés lors d'une première calibration, et
- corriger périodiquement ces coefficients en fonction des résultats de la mesure pour obtenir une mesure fiable de la pression.

**39.** Procédé selon l'une quelconque des revendications 37 ou 38, **caractérisé en ce que**, durant les périodes de fonctionnement du moteur d'entraînement (6), l'émetteur (12) est alimenté au moyen d'un courant continu, et **en ce que**, durant les périodes d'arrêt du moteur d'entraînement (6), l'émetteur (12) est alimenté au moyen d'un courant rectangulaire périodique obtenu en superposant à un courant constant $I_0$ une faible variation $\Delta I_0$ périodique, de telle sorte que la variation du signal optique qui en résulte puisse être considérée comme linéaire.

**40.** Procédé selon l'une quelconque des revendications 36 à 39, **caractérisé en ce que** la mesure et la correction des paramètres de fonctionnement du capteur de pression (20) sont effectuées de manière répétitive, pendant toute la durée de la période d'arrêt du moteur d'entraînement (6) du panneau mobile (4).

**41.** Procédé selon l'une quelconque des revendications 36 à 40, **caractérisé en ce que**, durant les périodes de fonctionnement du moteur d'entraînement (6) du panneau mobile (4), seules les dernières corrections des paramètres de fonctionnement du capteur de pression (20) stockées en mémoire sont prises en compte.

**42.** Procédé selon l'une quelconque des revendications 21 à 35, **caractérisé en ce que**, durant les périodes d'arrêt du moteur d'entraînement (6), on fait croître ou décroître le courant de polarisation de l'émetteur (12) jusqu'à ce que le niveau du signal de sortie du capteur de pression (20) soit sensiblement égal au niveau de seuil de déclenchement de l'alarme, et **en ce que**, lorsque cette condition est réalisée, on fixe le niveau du courant de polarisation de l'émetteur (12) pour que ledit signal de sortie dudit capteur de pression (20) soit à une valeur connue, supérieure au niveau de seuil de déclenchement de l'alarme.

**43.** Procédé selon l'une quelconque des revendications 21 à 35, **caractérisé en ce que**, durant les périodes d'arrêt du moteur d'entraînement (6), on fait croître ou décroître la valeur du signal de seuil d'un comparateur (38) qui fixe le seuil d'alarme, jusqu'à ce que cette valeur devienne sensiblement égale à la valeur du signal de sortie du capteur de pression (20), et **en ce que**, lorsque cette condition est réalisée, on fixe le seuil d'alarme à une valeur connue inférieure audit signal de sortie dudit capteur de pression (20).

**44.** Procédé selon l'une quelconque des revendications 42 ou 43, **caractérisé en ce que** le microcontrôleur de l'unité centrale (18) élabore un signal rectangulaire de fréquence fixe, mais avec des durées d'impulsions variables, ce signal étant ensuite envoyé sur un intégrateur (40, 42) qui transforme les durées d'impulsions en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

**45.** Procédé selon l'une quelconque des revendications 42 ou 43, **caractérisé en ce que** le microcontrôleur de l'unité centrale (18) élabore un signal dont les impulsions sont modulées en fréquence, ce signal étant ensuite envoyé sur un intégrateur (40, 42) qui transforme ledit signal en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

**46.** Procédé selon l'une quelconque des revendications 42 ou 43, **caractérisé en ce que** le microcontrôleur de l'unité centrale (18) élaboré un signal utilisant la modulation codée des impulsions, ce signal étant ensuite envoyé sur un intégrateur (40, 42) qui transforme ledit signal en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

**47.** Procédé selon l'une quelconque des revendications 1 à 46, **caractérisé en ce que**, durant la seconde séquence, il comprend les étapes consistant à calibrer les seconds moyens en :

- mesurant, pour différentes positions du panneau mobile (4) relativement au cadre (2) dans lequel ledit panneau (4) se déplace, la fréquence correspondante des impulsions provoquées par la rotation du moteur (6) pour déterminer la vitesse de déplacement instantanée du panneau (4) dans une position donnée, et en
- comparant, pour chaque position du panneau mobile (4), la fréquence des impulsions mesurées à la fréquence de ces mêmes impulsions lors du trajet précédent dudit panneau mobile (4) de sorte que, s'il existe une différence entre lesdites fréquences et que cette différence n'excède pas une valeur de sécurité prédéterminée, on corrige la fréquence seuil pour qu'elle ne commande pas l'arrêt et l'inversion du sens de marche du moteur (6).

**Patentansprüche**

1. Verfahren zum sequentiellen Steuern einer beweglichen Platte (4), die in einem Rahmen (2) von einem Elektromotor (6) gleitend angetrieben wird, das eine erste Sequenz umfasst, die darin besteht:

   - mit Hilfe erster Mittel das Vorhandensein eines Fremdkörpers zu erfassen, der dem vollständigen Schließen der beweglichen Platte (4) durch Einklemmen dieses Fremdkörpers zwischen der Platte (4) und dem Rahmen (2), in dem die Platte (4) gleitet, entgegenwirken kann, wobei diese ersten Mittel einen ersten Alarm erzeugen können, wenn das Vorhandensein des Fremdkörpers erfasst wird, und
   - mit Hilfe zweiter Mittel die Frequenz von Impulsen zu messen, die durch die Drehung des Elektromotors (6), der die bewegliche Platte (4) antreibt, erzeugt werden, und aus dieser Messung anhand einer im Voraus bekannten Referenzposition eine Angabe bezüglich der Verlagerung der beweglichen Platte (4) abzuleiten, wobei diese zweiten Mittel ebenfalls das Vorhandensein des Fremdkörpers erfassen können, wenn die Frequenz der Impulse kleiner als eine vorgegebene Schwellenfrequenz wird, und einen zweiten Alarm erzeugen können, wenn dieses Vorhandensein festgestellt wird,

   wobei dieses Verfahren **dadurch gekennzeichnet ist, dass** während der Aufwärtsbewegungsphase der beweglichen Platte (4) und bis zum Erreichen der Umgebung einer Bahnendezone, innerhalb derer die Platte (4) nur noch eine Strecke (l) bis zu ihrem vollständigen Schließen durchlaufen muss, ein Anhalten und dann die Umkehrung der Laufrichtung des Antriebsmotors (6) bei Empfang des ersten und/oder des zweiten Alarmsignals befohlen wird, dass während des Anstiegs der beweglichen Platte (4) über die verbleibende Strecke (l) bis zu ihrem vollständigen Schließen nur die ersten Mittel verwendet werden, um das Vorhandensein des Fremdkörpers zu erfassen, während die zweiten Mittel nur verwendet werden, um die Position der Platte (4) in Bezug auf den Rahmen (2), in dem sie gleitet, zu bestimmen.

2. Verfahren nach Anspruch 1, **dadurch gekennzeichnet, dass** eine Verzögerungsrampe der Geschwindigkeit des Antriebsmotors (6) befohlen wird, wenn die bewegliche Platte (4) in der Bahnendezone ankommt.

3. Verfahren nach einem der Ansprüche 1 oder 2, **dadurch gekennzeichnet, dass** bei einem Fehlen des ersten Alarmsignals der Antriebsmotor (6) angehalten wird, wenn sich die bewegliche Platte (4) in der Bahnendezone befindet und wenn die Frequenz der Impulse im Wesentlichen null wird.

4. Verfahren nach einem der Ansprüche 1 bis 3, **dadurch gekennzeichnet, dass** die Referenzposition die letzte berechnete Position der beweglichen Platte (4) vor dem Anhalten des Antriebsmotors (6) ist.

5. Verfahren nach einem der Ansprüche 1 bis 4, **dadurch gekennzeichnet, dass** es außerdem eine zweite Sequenz umfasst, die darin besteht, während der Perioden, in denen das Anhalten des Antriebsmotors (6) der beweglichen Platte (4) festgestellt wird, die ersten Erfassungsmittel zu kalibrieren, indem die Funktionsparameter der ersten Erfassungsmittel, die unter beliebigen Umgebungsbedingungen aufgenommen werden, in Abhängigkeit von entsprechenden Parametern von Eicherfassungsmitteln, die unter bekannten Referenzbedingungen aufgenommen werden, verglichen und korrigiert werden.

6. Verfahren nach einem der Ansprüche 1 bis 5, **dadurch gekennzeichnet, dass** es außerdem eine dritte Sequenz umfasst, die darin besteht, während der Abwärtsbewegungsphase der beweglichen Platte (4) die ersten Erfassungsmittel zu deaktivieren, während die zweiten Mittel dazu verwendet werden, die Geschwindigkeits- und Positionsparameter der beweglichen Platte (4) zu berechnen und sie mit Referenzwerten zu vergleichen, die in der Anhaltephase des Antriebsmotors (6) definiert werden, wobei der Fortschritt der beweglichen Platte (4) gemäß einer Verzögerungsrampe verlangsamt und dann angehalten wird, wenn ihre Position und ihre Geschwindigkeit die Referenzwerte erreichen.

7. Verfahren nach einem der Ansprüche 1 bis 6, **dadurch gekennzeichnet, dass** die ersten Mittel zum Erfassen des Vorhandensein eines Fremdkörpers, die das vollständige Schließen der beweglichen Platte (4) verhindern können, einen Lichtleitfaser-Drucksensor (20) umfassen.

8. Verfahren nach einem der Ansprüche 1 bis 7, **dadurch gekennzeichnet, dass** die Frequenz, die mit Hilfe der zweiten Mittel gemessen wird, die Frequenz der Impulse ist, die durch das Umschalten der Bürsten (28) des Elektromotors (6) hervorgerufen werden.

9. Verfahren nach einem der Ansprüche 1 bis 7, **dadurch gekennzeichnet, dass** die Frequenz die Frequenz der von einer optischen Codierungsvorrichtung erzeugten Impulse ist.

10. Verfahren nach einem der Ansprüche 1 bis 7, **dadurch gekennzeichnet, dass** die Frequenz die Frequenz der von einer magnetischen Codierungsvorrichtung erzeugten Impulse ist.

11. Verfahren nach einem der Ansprüche 8 bis 10, **dadurch gekennzeichnet, dass** die zweiten Mittel einen MOS-Transistor (30) umfassen, an dessen Anschlüssen die Impulse empfangen werden, die durch das Umschalten der Bürsten (28) des Elektromotors (6) hervorgerufen werden, wobei diese Impulse anschließend durch ein Filter (34) und einen Verstärker (36) laufen, bevor sie mittels eines Komparators (38) wieder geformt werden.

12. Verfahren nach Anspruch 11, **dadurch gekennzeichnet, dass** der MOS-Transistor (30) außerdem das Umschalten von Relais (32) des Elektromotors (6) steuert und somit die Verlagerungsrichtung der beweglichen Platte (4) bestimmt.

13. Verfahren nach einem der Ansprüche 9 bis 12, **dadurch gekennzeichnet, dass** die optische Codierungsvorrichtung eine optische Platte (82) sowie einen optischen Sender (88) und einen optischen Empfänger (90) umfasst.

14. Verfahren nach Anspruch 13, **dadurch gekennzeichnet, dass** die optische Platte (82) an der Welle (68) des Motors (6) angebracht ist und mehrere Schlitze (84) aufweist, die am Umfang der Platte (82) regelmäßig beabstandet sind, und dass der optische Sender (88) und der optische Empfänger (90) auf eine gemeinsame Achse relativ zueinander ausgerichtet sind und durch einen ausreichenden Abstand getrennt sind, um den Durchgang der Platte (82) zu ermöglichen.

15. Verfahren nach Anspruch 13, **dadurch gekennzeichnet, dass** die optische Platte (82) an der Welle (88) des Antriebsmotors (6) angebracht ist und auf einer ihrer Flächen mehrere reflektierende Elemente aufweist, die in regelmäßigen Abstandsintervallen zueinander angeordnet sind, und dass der optische Sender (88) und der optische Empfänger (90) gegenüber den reflektierenden Elementen nebeneinander angeordnet sind.

16. Verfahren nach einem der Ansprüche 10 bis 15, **dadurch gekennzeichnet, dass** die magnetische Codierungsvorrichtung mehrere magnetisierte Elemente umfasst, die an der Welle (68) des Antriebsmotors (6) angeordnet sind, wobei ein Magnetfelddetektor in der Nähe der magnetisierten Elemente angeordnet ist.

17. Verfahren nach Anspruch 16, **dadurch gekennzeichnet, dass** der Magnetfelddetektor eine Hall-Effekt-Sonde ist.

18. Verfahren nach einem der Ansprüche 1 bis 17, **dadurch gekennzeichnet, dass** die Vergleichsmittel ermöglichen, die Frequenz der durch die Drehung des Antriebsmotors (6) der beweglichen Platte (4) hervorgerufenen Impulse mit einer Schwellenfrequenz zu vergleichen.

19. Verfahren nach einem der Ansprüche 1 bis 18, **dadurch gekennzeichnet, dass** Mittel ermöglichen, eine Verzögerungsrampe der Geschwindigkeit des Antriebsmotors (6) der beweglichen Platte (4) zu programmieren, wenn diese letztere in der Bahnendezone ankommt.

20. Verfahren nach den Ansprüchen 18 und 19, **dadurch gekennzeichnet, dass** die Mittel zum Vergleichen und Programmieren der Verzögerungsrampe eine Zentraleinheit (18) mit Mikrocontroller und/oder Mikroprozessor umfassen.

21. Verfahren nach einem der Ansprüche 7 bis 20, **dadurch gekennzeichnet, dass** der Drucksensor (20) durch eine Lichtleitfaser (10) gebildet ist, der Mittel (12, 14) zum Senden und Empfangen optischer Signale, die sich in der Faser (10) ausbreiten, zugeordnet sind, wobei die Sendemittel, die elektrisch gespeist werden, in die Lichtleitfaser (10) ein Lichtsignal einleiten, das sich bis zu den Empfangsmitteln (14) ausbreitet, die in Reaktion auf ein von der Lichtleitfaser (10) übertragenes Lichtsignal ein elektrisches Signal zu einer Steuerzentrale (18) mit Mikrocontroller und/oder Mikroprozessor senden, welche ihrerseits die Informationen, die von den Empfangsmitteln (14) kommen, analysieren und im Ereignisfall den Lauf des Elektromotors (6), der die bewegliche Platte (4) antreibt, anhalten oder seine Richtung umkehren.

22. Verfahren nach Anspruch 21, **dadurch gekennzeichnet, dass** der Lichtleitfaser-Drucksensor eine Mittelader umfasst, die die Form eines im Wesentlichen zylindrischen oder lang gestreckten Trägers (44) mit polygonalem Querschnitt aufweist, auf dessen Oberfläche zwei Nuten (46) ausgebildet sind, die diametral entgegengesetzt sind und parallel zur Längsachse des Trägers (44) verlaufen und in die die Lichtleitfaser belastungsfrei eingesetzt ist, wobei der zylindrische Träger (44) und seine Lichtleitfaser (10) in eine longitudinal geschlitzte Hülle (48) eingesetzt sind, in der mehrere Klemmbacken (50) ausgestanzt worden sind, die dazu dienen, die Lichtleitfaser (10) durch elastischen Druck zu krümmen und ihren Krümmungsradius lokal zu modifizieren, wobei die so gebildete Gesamtheit schließlich von einem Mantel (42) umhüllt ist.

23. Verfahren nach Anspruch 22, **dadurch gekennzeichnet, dass** der Träger (44) eine periodische Folge von kegelstumpfförmigen Elementen aufweist, längs derer die Lichtleitfaser (10) befestigt ist.

24. Verfahren nach einem der Ansprüche 22 oder 23, **dadurch gekennzeichnet, dass** die Lichtleitfaser auf der inneren Fläche der Klemmbacken (50) der Hülle (48) angebracht ist, wobei das freie Ende der Backen (50) zurückgekrümmt ist, um die Lichtleitfaser (10) längs der Hülle (50) zu halten und zu führen.

25. Verfahren nach Anspruch 21, **dadurch gekennzeichnet, dass** die Lichtleitfaser (10) zwischen einem ersten und einem zweiten Band (56, 58) sandwichartig aufgenommen ist, wobei das erste Band (56), das aus einem im Wesentlichen harten elastomeren Material hergestellt ist, eine Folge transversaler Hohlräume (60), die längs des Bandes (56) angeordnet sind, und wenigstens eine Rille (62), in der die Lichtleitfaser (10) aufgenommen ist, aufweist, wobei die Rille (62) parallel zur longitudinalen Symmetrieachse des Bandes (56) angeordnet ist, wobei die Hohlräume (60) teilweise oder vollständig durch Stopfen (64) ausgefüllt sind, die eine zu jener der Hohlräume (60) komplementäre Form aufweisen und unter der Fläche des zweiten Bandes (58) angeordnet sind, wobei die Stopfen (64) aus einem elastomeren Material, das wesentlich weicher als das Erste ist, hergestellt sind.

26. Verfahren nach einem der Ansprüche 22 bis 25, **dadurch gekennzeichnet, dass** die Lichtleitfaser (10) vom Typ mit Indexsprung ist und dass die Periode der Mikrokrümmung T, die durch den Abstand der Backen (50) oder der Hohlräume (60) definiert ist, die folgende Beziehung erfüllen muss:

$$T \leq \frac{2\pi\rho^2 k n_c}{1 + 2\rho k n_c \sqrt{\Delta}}$$

wobei $k = 2\pi/\lambda$ das Modul des Wellenvektors ist, $\rho$ und $n_c$ der Radius bzw. der Brechungsindex des Kerns der Faser (10) ist und $\Delta$ die relative Differenz zwischen den Indizes des Kerns und des Mantels der Lichtleitfaser (10) ist.

27. Verfahren nach einem der Ansprüche 22 bis 25, **dadurch gekennzeichnet, dass** die Lichtleitfaser (10) vom Typ mit Indexgradient ist und dass die Periode der Mikrokrümmung, die durch den Zwischenraum der Backen (50) oder der Hohlräume (60) definiert ist, ein Vielfaches der Periode T sein muss, die durch die folgende Beziehung gegeben ist:

$$T \leq \rho\pi\sqrt{\frac{2}{\Delta}}$$

wobei $\rho$ und $\Delta$ der Radius des Kerns der Faser (10) bzw. die relative Differenz zwischen den Indizes des Kerns und des Mantels der Lichtleitfaser (10) sind.

28. Verfahren nach einem der Ansprüche 22 bis 27, **dadurch gekennzeichnet, dass** die Lichtleitfaser (10) vom plastischen Typ ist.

29. Verfahren nach einem der Ansprüche 21 bis 28, **dadurch gekennzeichnet, dass** der Drucksensor (20) im Durchlassmodus arbeitet.

30. Verfahren nach einem der Ansprüche 21 bis 28, **dadurch gekennzeichnet, dass** der Drucksensor (20) im Reflexionsmodus arbeitet.

31. Verfahren nach Anspruch 29, **dadurch gekennzeichnet, dass** die Sendemittel (12) eine Elektrolumineszenzdiode umfassen und dass die Empfangsmittel (14) eine Photodiode umfassen.

32. Verfahren nach Anspruch 31, **dadurch gekennzeichnet, dass** die Elektrolumineszenzdiode und die Photodiode vom SMD-Typ sind.

33. Verfahren nach Anspruch 32, **dadurch gekennzeichnet, dass** die Elektrolumineszenzdiode und die Photodiode in dasselbe Gehäuse, das auch die beiden Enden der den Drucksensor (20) bildenden Lichtleitfaser (10) aufnimmt, eingesetzt sind, wobei dieses Gehäuse andererseits mit Verbindungsmitteln versehen ist, die seine Befestigung an einer elektronischen Karte erleichtern.

34. Verfahren nach Anspruch 30, **dadurch gekennzeichnet, dass** die Sendefunktion (12) und die Empfangsfunktion (14) durch eine Laserdiode gewährleistet sind, die mit ihrer eigenen Photodetektorzelle versehen ist.

35. Verfahren nach einem der Ansprüche 21 bis 34, **dadurch gekennzeichnet, dass** die Lichtleitfaser (10) wenigstens längs eines Randes einer Öffnung (2), die dazu vorgesehen ist, von der beweglichen Platte (4) verschlossen zu werden, angeordnet ist.

36. Verfahren nach einem der Ansprüche 21 bis 35, **dadurch gekennzeichnet, dass** es die Schritte umfasst, die darin bestehen:

- während einer kurzen Dauer den elektrischen Speisestrom des Senders (12) ab dem Zeitpunkt, zu dem das Anhalten des Antriebsmotors (6) der beweglichen Platte (4) festgestellt wird, zu unterbrechen;
- den Offsetpegel des elektrischen Signals, das von dem Empfänger (14) ausgesendet wird, zu messen und dann seinen Wert auf null zurückzusetzen;
- den Sender (12) erneut mittels eines elektrischen Gleichstroms $I_0$ zu speisen und
- den Ausgangspegel $V_S$ des Empfängers (14) zu messen und ihm einen Koeffizienten k zuzuweisen, derart, dass $kV_S = V_R$, wobei $V_R$ ein bekannter Referenzpegel eines Eichsensors ist, der unter bekannten Referenzbedingungen aufgenommen wird.

37. Verfahren nach einem der Ansprüche 21 bis 35, **dadurch gekennzeichnet, dass** es die Schritte umfasst, die darin bestehen:

- den Sender (12) mittels eines periodischen Rechteckwellenstroms zu speisen;
- den Hochpegel des Ausgangs $V_S$ des Empfängers (12) sowie seine Änderung $\Delta V_S$ zu messen und
- die Operation $V_S(\Delta V_R/\Delta V_S) = V_S'$ auszuführen und den Koeffizienten $C = V_R - V_S'$ in der Weise zu bestimmen, dass

  $V_S'' = V_R$, wobei $V_R$ und $\Delta V_R$ bekannte Referenzwerte eines Eichsensors sind, die unter bekannten Referenzbedingungen aufgenommen werden, wobei das Verhältnis $\Delta V_R/\Delta V_S$ der Korrekturkoeffizient für die Empfindlichkeit des Drucksensors (20) ist und wobei C der Korrekturkoeffizient des verbleibenden Offsets des Sensors (20) ist.

38. Verfahren nach Anspruch 37, **dadurch gekennzeichnet, dass** es die Schritte umfasst, die darin bestehen:

- den Sender (12) mittels eines periodischen Rechteckwellenstroms zu speisen;
- den Hochpegel des Ausgangs $V_S$ des Empfängers (14) sowie seine Änderung $\Delta V_S$ zu messen;
- den in Abhängigkeit vom Pegel des gemessenen Signals ausgeübten Druck mittels einer Polynomgleichung zumindest ersten Grades, deren Koeffizienten anfangs bei der ersten Eichung bestimmt werden, zu berechnen und
- diese Koeffizienten in Abhängigkeit von den Messergebnissen periodisch zu korrigieren, um eine zuverlässige Messung des Drucks zu erhalten.

39. Verfahren nach einem der Ansprüche 37 oder 38, **dadurch gekennzeichnet, dass** während der Betriebsperioden des Antriebsmotors (6) der Sender (12) mittels eines Gleichstroms gespeist wird und dass während der Halteperioden des Antriebsmotors (6) der Sender (12) mittels eines periodischen Rechteckwellenstroms gespeist wird, der durch Überlagern einer kleinen periodischen Schwankung $\Delta I_0$ und eines konstanten Stroms $I_0$ erhalten wird, derart, dass die Änderung des optischen Signals, die sich daraus ergibt, als linear angesehen werden kann.

40. Verfahren nach einem der Ansprüche 36 bis 39, **dadurch gekennzeichnet, dass** die Messung und die Korrektur der Betriebsparameter des Drucksensors (20) während der gesamten Dauer der Halteperiode des Antriebsmotors (6) der beweglichen Platte (4) wiederholt ausgeführt werden.

41. Verfahren nach einem der Ansprüche 36 bis 40, **dadurch gekennzeichnet, dass** während der Betriebsperioden des Antriebsmotors (6) der beweglichen Platte (4) nur die in einem Speicher gespeicherten letzten Korrekturen der Betriebsparameter des Drucksensors (20) berücksichtigt werden.

42. Verfahren nach einem der Ansprüche 21 bis 35, **dadurch gekennzeichnet, dass** während der Halteperioden des Antriebsmotors (6) der Vorspannungsstrom des Senders (12) erhöht oder erniedrigt wird, bis der Signalpegel des Ausgangs des Drucksensors (20) im Wesentlichen gleich dem Alarmauslöse-Schwellenpegel ist, und dass dann, wenn diese Bedingung erfüllt ist, der Pegel des Vorspannungsstroms des Senders (12) fixiert wird, damit das Ausgangssignal des Drucksensors (12) einen bekannten Wert hat, der höher als der Schwellenpegel der Alarmauslösung ist.

43. Verfahren nach einem der Ansprüche 21 bis 35, **dadurch gekennzeichnet, dass** während der Halteperioden des Antriebsmotors (6) der Wert des Schwellensignals eines Komparators (38), der die Alarmschwelle fixiert, erhöht oder erniedrigt wird, bis dieser Wert im Wesentlichen gleich dem Wert des Ausgangssignals des Drucksensors (20) wird, und dass dann, wenn diese Bedingung erfüllt ist, der Schwellenalarm auf einen bekannten Wert fixiert wird, der kleiner als das Ausgangssignal des Drucksensors (20) ist.

44. Verfahren nach einem der Ansprüche 42 oder 43, **dadurch gekennzeichnet, dass** der Mikrocontroller der Zentraleinheit (18) ein Rechteckwellensignal mit fester Frequenz, jedoch mit variabler Impulsdauer, erstellt, wobei dieses Signal anschließend zu einem Integrator (40, 42) geschickt wird, der die Impulsdauern in unterschiedliche Spannungspegel umsetzt, so dass die Form und der Pegel des Vorspannungsstroms des Senders (12) programmiert werden kann oder der Wert des Schwellensignals des Komparators (38), der die Alarmschwelle fixiert, modifiziert werden kann.

45. Verfahren nach einem der Ansprüche 42 oder 43, **dadurch gekennzeichnet, dass** der Mikrocontroller der Zentraleinheit (18) ein Signal erstellt, dessen Impulse frequenzmoduliert werden, wobei dieses Signal anschließend zu einem Integrator (40, 42) geschickt wird, der das Signal in unterschiedliche Spannungspegel umsetzt, so dass die Form und der Pegel des Vorspannungsstroms des Senders (12) programmiert oder der Wert des Schwellensignals des Komparators (38), der die Alarmschwelle fixiert, modifiziert werden können.

46. Verfahren nach einem der Ansprüche 42 oder 43, **dadurch gekennzeichnet, dass** der Mikrocontroller der Zentraleinheit (18) ein Signal erstellt, das die codierte Modulation der Impulse verwendet, wobei dieses Signal anschließend zu einem Integrator (40, 42) geschickt wird, der das Signal in unterschiedliche Spannungspegel umsetzt, so dass die Form und der Pegel des Vorspannungsstroms des Senders (12) programmiert oder der Wert des Schwellensignals des Komparators (38), der die Alarmschwelle fixiert, modifiziert werden können.

47. Verfahren nach einem der Ansprüche 1 bis 46, **dadurch gekennzeichnet, dass** es während der zweiten Sequenz die Schritte umfasst, die darin bestehen, die zweiten Mittel zu kalibrieren, indem:

- für verschiedene Positionen der beweglichen Platte (4) relativ zu dem Rahmen (2), in dem sich die Platte (4) verlagert, die Frequenz gemessen wird, die den durch die Drehung des Motors (6) hervorgerufenen Impulsen entspricht, um die momentane Verlagerungsgeschwindigkeit der Platte (4) in einer gegebenen Position zu bestimmen, und indem
- für jede Position der beweglichen Platte (4) die Frequenz der gemessenen Impulse mit der Frequenz dieser Impulse auf der vorhergehenden Bahn der beweglichen Platte (4) verglichen wird, so dass dann, wenn ein Unterschied zwischen diesen Frequenzen vorhanden ist und dieser Unterschied einen vorgegebenen Sicherheitswert nicht übersteigt, die Schwellenfrequenz korrigiert wird, so dass sie nicht das Anhalten des Laufs des Motors (6) und seine Richtungsumkehr befiehlt.

**Claims**

1. Sequential control method for a moving panel (4) which is driven so as to slide in a frame (2) by an electric motor (6), including a first sequence consisting in :

   - detecting by first means the presence of a foreign body capable of preventing the complete closing of the moving panel (4) by becoming caught between said panel (4) and the frame (2) into which said panel (4) slides, these first means being capable of generating a first alarm when the presence of said foreign body is detected; and
   - measuring by second means the frequency of the pulses caused by the rotation of the electric motor (6) driving the moving panel (4), and deducing from this measure an indication of the travel of the moving panel (4) from a known reference position beforehand, these second means being also capable to detect the presence of the foreign body when the frequency of the pulses becomes less than a predetermined threshold frequency and to produce a second alarm when this presence is detected;

   this control method being **characterised in that**, during the phase in which moving panel (4) rises and until it reaches the vicinity of an end-of-travel zone in which the panel (4) has only a distance (I) to cover before its complete closing, stopping, then reversing the working direction of the driving motor (6) is commanded upon reception of the first and/or second alarm signal, and **in that**, during the ascent of the moving panel (4) over the remaining distance (I) until its complete closing, only the first means are used to detect the presence of the foreign body, whereas the second means are only used to determine the position of said panel (4) with respect to the frame (2) into which it slides.

2. Method according to claim 1, **characterised in that** a deceleration ramp for the speed of the driving motor (6) is commanded when the moving panel (4) reaches the end-of-travel zone.

3. Method according to any of claims 1 or 2, **characterised in that**, in the absence of the first alarm signal, the driving motor (6) is stopped when the moving panel (4) is in the end-of-travel zone and that the pulses frequency becomes substantially zero.

4. Method according to any of claims 1 to 3, **characterised in that** the reference position is the last calculated position of the moving panel (4) before the driving motor (6) stops.

**5.** Method according to any of claims 1 to 4, **characterised in that** it further includes a second sequence consisting, during the periods in which it is observed that the motor (6) driving the moving panel (4) has stopped, in calibrating the first detection means by comparing and correcting the operating parameters of said first detection means, taken in any environmental conditions, as a function of corresponding parameters of standard detection means taken in known reference conditions.

**6.** Method according to any of claims 1 to 5, **characterised in that** it further includes a third sequence consisting, during the phase of descent of the moving panel (4), to deactivate the first detection means, whereas the second means are used to calculate the speed and position parameters for said moving panel (4) and to compare them to reference values defined during the idle phase of driving motor (6), the progression of said moving panel (4) being slowed down then stopped in accordance with a deceleration ramp when its position and speed reach said reference values.

**7.** Method according to any of claims 1 to 6, **characterised in that** the first detection means of the presence of a foreign body capable of preventing the moving panel (4) from closing completely comprise an optical fibre pressure sensor (20).

**8.** Method according to any of claims 1 to 7, **characterised in that** the frequency measured with the help of the second means is the frequency of the pulses caused by the switching of the brushes (28) of the electric motor (6).

**9.** Method according to any of claims 1 to 7, **characterised in that** the frequency is the frequency of the pulses generated by an optical encoding device.

**10.** Method according to any of claims 1 to 7, **characterised in that** the frequency is the frequency of the pulses generated by a magnetic encoding device.

**11.** Method according to any of claims 8 to 11, **characterised in that** the second means include a MOS transistor (30) across the terminals of which are received the pulses caused by the switching of the brushes (28) of the electric motor (6), these pulses then passing through a filter (34) and an amplifier (36) before being reshaped by means of a comparator (38).

**12.** Method according to claim 11, **characterised in that** the MOS transistor (30) further controls the switching of the relays (32) of the electric motor (6) and thus determines the direction of movement of the moving panel (4).

**13.** Method according to any of claims 9 to 12, **characterised in that** the optical encoding device includes an optical disc (82) as well as an optical emitter (88) and an optical receiver (90).

**14.** Method according to claim 13, **characterised in that** the optical disc (82) is mounted on shaft (68) of the motor (6) and has a plurality of slits (84) regularly spaced on the periphery of said disc (82), and **in that** the optical emitter (88) and the optical receiver (90) are aligned along a common axis with respect to each other and are separated by a sufficient distance to allow the disc (82) to pass.

**15.** Method according to claim 13, **characterised in that** the optical disc (82) is mounted on shaft (68) of the driving motor (6) and has on one of its faces a plurality of reflective elements arranged at intervals at regular distances from each other, and **in that** the optical emitter (88) and the optical receiver (90) are placed side by side facing the reflective elements.

**16.** Method according to any of claims 10 to 15, **characterised in that** the magnetic encoding device includes a plurality of magnetised elements arranged on shaft (68) of the driving motor (6), a magnetic field detector being placed in proximity to said magnetised elements.

**17.** Method according to claim 16, **characterised in that** the magnetic field detector is a Hall probe.

**18.** Method according to any of claims 1 to 17, **characterised in that** comparison means allow the frequency of the pulses caused by the rotation of the driving motor (6) of the moving panel (4) to be compared to a threshold frequency.

**19.** Method according to any of claims 1 to 18, **characterised in that** means allow a deceleration ramp for the speed of the driving motor (6) of moving panel (4) to be programmed when the latter reaches an end-of-travel zone.

**20.** Method according to claim 18 and 19, **characterised in that** the comparison and deceleration ramp programming means include a central unit (18) with a microcontroller and/or a microprocessor.

**21.** Method according to any of claims 7 to 20, **characterised in that** the pressure sensor (20) is formed of an optical fibre (10) associated with means (12, 14) for emitting and receiving optical signals propagating within said optical fibre (10), the emitting means (12), supplied with electric power, injecting a light signal into the optical fibre (10), the light signal propagating as far as the receiving means (14) which transmit, in response to the light signal transmitted by the optical fibre (10), an electric signal to a central unit (18) with a microcontroller and/or a microprocessor which analyses the data originating from said receiving means (14) and, in the event of an incident, allows the electric motor (6) driving the moving panel (6) to be stopped or the working direction thereof to be reversed.

22. Method according to claim 21, **characterised in that** the optical fibre pressure sensor t includes a central core which takes the form of a support (44) of substantially cylindrical shape or elongated with a polygonal cross-section, at the surface of which two diametrically opposite grooves (46) are made, which extend parallel to the longitudinal axis of said support (44) and in which optical fibre (10) is housed without stress, said cylindrical support (44) and its optical fibre (10) being inserted in a covering (48) which is slit longitudinally and in which a plurality of clamping jaws (50) have been cut, said jaws (50) being used to bend the optical fibre (10) by elastic pressure and to modify locally its radius of curvature, the assembly thereby formed being finally covered in a sheath (52).

23. Method according to claim 22, **characterised in that** said support (44) includes a periodic succession of truncated elements along which the optical fibre (10) is fixed.

24. Method according to any of claims 22 or 23, **characterised in that** the optical fibre is mounted on the inner face of the clamping jaws (50) of the covering (48), the free end of said jaws (50) being bent in order to hold and guide the optical fibre (10) along said covering (48).

25. Method according to claim 21, **characterised in that** the optical fibre includes an optical fibre (10) sandwiched between first and second bands (56, 58), the first band (56), made of a relatively hard elastomeric material, having a succession of transverse cavities (60) regularly distributed along said band (56) as well as at least one groove (62) in which the optical fibre (10) is housed, said groove (62) being arranged parallel to the longitudinal axis of symmetry of the band (56), said cavities (60) being partially or totally filled with studs (64) having a complementary shape to that of said cavities (60) and arranged on the underside of the second band (58), said studs (64) being made of a substantially softer elastomeric material than the first.

26. Method according to any of claims 22 to 25, **characterised in that** the optical fibre (10) is of the step index type, and **in that** the microbending period T defined by the spacing of the jaws (50) or the cavities (60) has to satisfy the relationship:

$$T \leq \frac{2\pi\rho^2 k n_c}{1 + 2\rho k n_c \sqrt{\Delta}}$$

where $k = 2\pi/\lambda$ is the module of the wave vector, $\rho$ and $n_c$ are respectively the radius and the core refractive index of the fibre (10) and $\Delta$ is the relative difference between the core and sheath indices of the optical fibre (10).

27. Method according to any of claims 22 to 25, **characterised in that** the optical fibre (10) is of the index gradient type, and **in that** the microbending period defined by the spacing of the jaws (50) or the cavities (60) has to have a multiple value of the period T given by the relation:

$$T \leq \rho\pi\sqrt{\frac{2}{\Delta}}$$

where $\rho$ and $\Delta$ are respectively the core radius of the fibre (10) and the relative difference between the core and sheath indices of the optical fibre (10).

28. Method according to any of claims 22 to 27, **characterised in that** the optical fibre (10) is of the plastic type.

29. Method according to any of claims 21 to 28, **characterised in that** the pressure sensor (20) operates in transmission mode.

30. Method according to any of claims 21 to 28, **characterised in that** the pressure sensor (20) operates in reflection mode.

31. Method according to claim 29, **characterised in that** the emission means (12) include an electroluminescent diode and **in that** the reception means (14) include a photodiode.

32. Method according to claim 31, **characterised in that** the electroluminescent diode and the photodiode are of the SMD type.

33. Method according to claim 32, **characterised in that** the electroluminescent diode and the photodiode are arranged in the same case which also accommodates both ends of the optical fibre (10) forming the pressure sensor (20), this case being also provided with connection means facilitating the securing thereof onto an electronic board.

34. Method according to claim 30, **characterised in that** the emission (12) and reception (14) functions are assured by a laser diode provided with its own photodetective cell.

35. Method according to any of claims 21 to 34, **characterised in that** the optical fibre (10) is arranged along at least one edge of an opening (2) intended to be closed by the moving panel (4).

36. Method according to any of claims 21 to 35, **characterised in that** it includes the steps of :

   - cutting off for a short instant the emitter's (12) electric supply current as soon as it is observed that the motor (6) driving the moving panel (4) has stopped;
   - measuring the offset level of the electric signal transmitted by the receiver (14), then resetting its value to zero;
   - supplying the emitter (12) again by means of a constant direct current $I_O$; and
   - measuring the output level $V_S$ of the receiver (14), and allocating it a coefficient k such that $kV_S = V_R$, where $V_R$ is a known reference level of a standard sensor taken in known reference conditions.

37. Method according to any of claims 21 to 35, **characterised in that** it includes the steps of:

   - supplying the emitter (12) by means of a periodic rectangular current;
   - measuring the high output level $V_S$ of the receiver (14) as well as its variation $\Delta V_S$, and
   - performing the operation $V_S (\Delta V_S/\Delta V_R) = V'_S$ and determining the coefficient $C = V_R - V_S'$ so that
   $V_S" = V_R$, where $V_R$ and $\Delta V_R$ are known reference values of a standard sensor taken in known reference conditions, the ratio $\Delta V_S/\Delta V_R$ is the pressure sensor (20) sensitivity correction coefficient, and C is the residual offset correction coefficient of said sensor (20).

38. Method according to claim 37, **characterised in that** it includes the steps of:

   - supplying the emitter (12) by means of a periodic rectangular current;
   - measuring the high output level $V_S$ of the receiver (14) as well as its variation $\Delta V_S$;
   - calculating the pressure applied as a function of the level of the measured signal by means of a polynomial equation of a degree greater than or equal to 1 and whose coefficients are initially determined during a first calibration; and
   - periodically correcting these coefficients as a function of the measurement results in order to obtain a reliable pressure measurement.

39. Method according to any of claims 37 or 38, **characterised in that**, during the operating periods of the driving motor (6), the emitter (12) is supplied by means of a direct current, and **in that**, during the idle periods of the driving motor (6), the emitter (12) is supplied by means of a periodic rectangular current obtained by superposing a low periodic variation $\Delta I_o$ on a constant current $I_o$, so that the variation in the resulting optical signal can be considered linear.

40. Method according to any of claims 36 to 39, **characterised in that** the measurement and the correction of the operating parameters of the pressure sensor (20) are performed repeatedly, during the entire duration of the idle period of the motor (6) driving the moving panel (4).

41. Method according to any of claims 36 to 40, **characterised in that**, during the operating periods of the motor (6) driving the moving panel (4), only the last corrections to the operating parameters of the pressure sensor (20) stored in the memory are taken into account.

42. Method according to any of claims 21 to 35, **characterised in that**, during the idle periods of the driving motor (6), the polarisation current of the emitter (12) is increased or decreased until the output signal level of the pressure sensor (20) is substantially equal to the alarm trigger threshold level, and **in that**, when this condition is achieved, the polarisation current level of the emitter (12) is fixed so that said output signal of said pressure sensor (20) is at a known value, greater than the alarm trigger threshold level.

43. Method according to any of claims 21 to 35, **characterised in that**, during the idle periods of the driving motor (6), the threshold signal value of a comparator (38) which fixes the alarm threshold is increased or decreased, until said value becomes substantially equal to the output threshold value of the pressure sensor (20), and **in that**, when this condition is achieved, the alarm threshold is fixed at a known value lower than said output signal of said pressure sensor (20).

44. Method according to any of claims 42 or 43, **characterised in that** the microcontroller of the central unit (18) generates a fixed frequency rectangular signal, with variable pulse durations, said signal being then sent to an integrator (40, 42) which converts the pulse durations into distinct voltage levels, so that the shape and the level of the emitter (12) polarisation current can be programmed, or the threshold signal value comparator (38) which fixes the alarm threshold can be modified.

**45.** Method according to claims 42 or 43, **characterised in that** the microcontroller of the central unit (18) generates a signal whose pulses are frequency modulated, said signal being then sent to an integrator (40, 42) which converts the signal into distinct voltage levels, so that the shape and the level of the emitter (12) polarisation current can be programmed, or the threshold signal value comparator (38) which fixes the alarm threshold can be modified.

**46.** Method according to claims 42 or 43, **characterised in that** the microcontroller of the central unit (18) generates a signal using the coded pulse modulation, said signal being then sent to an integrator (40, 42) which converts said signal into distinct voltage levels, so that the shape and the level of the emitter (12) polarisation current can be programmed, or the threshold signal value comparator (38) which fixes the alarm threshold can be modified.

**47.** Method according to any of claims 1 to 36, **characterised in that**, during the second sequence, it comprises the steps consisting in calibrating the second means by :

- measuring, for different positions of the moving panel (4) relative to the frame (2) into which said panel moves, the corresponding frequency of the pulses caused by the rotation of the motor (6) to determine the instantaneous speed of movement of the panel (4) in a given position; and
- comparing, for each position of the moving panel (4), the frequency of the measured pulses to the frequency of the same pulses during the preceding travel of said moving panel (4) so that, if there is a difference between said frequencies and this difference does not exceed a predetermined safety value, the threshold frequency is corrected so that it does not command the stopping and reversal of the working direction of the motor (6).

Fig. 1

Fig. 2

Fig. 3

EP 1 142 077 B1

# Fig. 4

# Fig. 5

# Fig. 6

## Fig. 7

## Fig. 8

Niveau de signaux
de sortie du capteur

Niveau
de seuil

Niveau de sortie
du capteur

Début de période
d'arrêt du moteur

Temps

## Fig. 9

Niveau de signaux
de sortie du capteur

Niveau
de seuil

Niveau de sortie
du capteur

Début de période
d'arrêt du moteur

Temps

## Fig. 10

Niveau de signaux

Niveau de sortie

Niveau de seuil

Début de période d'arrêt du moteur

Temps

## Fig. 11

Niveau de signaux

Niveau de sortie

Niveau de seuil

Début de période d'arrêt du moteur

Temps

## Fig. 12

18

PWM → 40 → 12

38 ← 14

PWM → 42

Fig. 13a

52

48

50

44

46

10

10

54

Fig. 13b

44

10    46

46

10

Fig. 14

Fig. 15

64

64

58

62

60

60

56

Fig. 16

62

60

60

56

Fig. 17

Fig. 18

6

Fig. 19

66

86

94

74

82

94

68

Fig. 20

94   88

86

90

84

82

84

94

Fig. 21

78

88

90

86

Fig. 22

6

66

76

92

72

70

# Fig. 23